# EUROPEAN PATENT APPLICATION

(11) **EP 3 490 056 A1**
(43) Date of publication of application: **29.05.2019**
(21) Application number: 17831148.6
(22) Date of filing: 21.07.2017
(51) Int. Cl.: H01P 1/213, H01P 3/12

(54) **DIPLEXER AND TRANSMITTING AND RECEIVING SYSTEM**

(30) Priority: 22.07.2016 JP 2016144451; 24.03.2017 JP 2017059819
(71) Applicant: Fujikura Ltd., Tokyo 135-8512 (JP)
(72) Inventor: UEMICHI, Yusuke, Sakura-shi Chiba 285-8550 (JP)
(74) Representative: Cabinet Plasseraud
(86) International application number: PCT/JP2017/026506
(87) International publication number: WO 2018/016632

(57) **Abstract**

Provided is a diplexer that is smaller and more lightweight than conventional diplexers. A diplexer (10) includes a filter pair (20), first and second directional coupler sections (30, 40), and first and second converter section pairs (50, 60). These members (20, 30, 40, 50, 60) are constituted by waveguides. The waveguides are post-wall waveguides that have a first wide wall (13), a second wide wall (12), and narrow walls (211, 221, 23, 311, 321, 33, 411, 421, 43, 511, 521, 53, 611, 621, 63). The first wide wall (13) and the second wide wall (12) are a pair of conductor plates provided on the opposite sides of a dielectric substrate (11). Each of the narrow walls (211, 221, 23, 311, 321, 33, 411, 421, 43, 511, 521, 53, 611, 621, 63) is a post wall constituted by conductor posts (211i, 221i, 23i, 311i, 321i, 33i, 411i, 421i, 43i, 511i, 521i, 53i, 611i, 621i, 63i) passing through the dielectric substrate (11).

## Description

### Technical Field

The present invention relates to a diplexer and a transmitting and receiving system including a diplexer.

### Background Art

Radio communication equipment, radar devices, and the like, which employ a frequency division duplex (FDD) system, are required to transmit and receive high frequency signals (which are microwaves or millimeter waves) via a single antenna circuit shared by a transmitter circuit and a receiver circuit. To achieve these requirements, a diplexer is used.

A diplexer is constituted by: converter sections which are interfaces for connection with a transmitter circuit, a receiver circuit, and an antenna circuit; directional coupler sections for coupling between one waveguide and the other waveguide; and filters that allow passage of only high frequency signals within a certain band.

For example, Patent Literature 1, Non-patent Literatures 1 and 2, and the like disclose a technique of obtaining a diplexer by: forming parts such as filters, directional coupler sections, and converter sections by processing (e.g., cutting) a plurality of pieces of metal material; and assembling the parts such as the filters, the directional coupler sections, and the converter sections together.

### Citation List

### [Patent Literature]

[Patent Literature 1]
Japanese Patent Application Publication Tokukai No. 2010-187420 (Publication date: August 26, 2010)

### [Non-patent Literature]

[Non-patent Literature 1]
   PLANAR INTEGRATED WAVEGUIDE DIPLEXER FOR LOW-LOSS MILLIMETER-WAVE APPLICATIONS, Microwave Conference, 1997, 27th European (Volume-2) 8-12 September 1997, pp. 676-680.
[Non-patent Literature 2]
   E-Plane Double Ridge Waveguide Filters and Diplexers for Communication Systems, Microwave Conference, 2001, 31st European, 24-26 September 2001, pp. 1-4.
[Non-patent Literature 3]
   Y. Uemichi, el. al, Compact and Low-Loss Bandpass Filter Realized in Silica-Based Post-Wall Waveguide for 60-GHz applications, IEEE MTT-S IMS, May 2015.

### Summary of Invention

### Technical Problem

However, the conventional diplexers, which have been produced by processing a plurality of pieces of metal material, have an issue in that they are large in size and weight.

On the other hand, a technique using a post-wall waveguide is known as a technique concerning waveguides that guide microwaves and millimeter waves. Waveguides produced using a post-wall waveguide technique are smaller and more lightweight than conventional waveguides produced by processing metal material. For example, Non-patent Literature 3 discloses a filter produced using a post-wall waveguide technique. The filter is a kind of waveguide which only allows passage of high frequency signals within a certain band.

However, a diplexer constituted by filters, directional coupler sections, and converter sections, all of which are produced using a post-wall waveguide technique and which are integral with each other, has not been realized so far.

The present invention was made in view of the above issue, and an object thereof is to provide a diplexer which is smaller and more lightweight than conventional diplexers.

### Solution to Problem

In order to attain the above object, a diplexer in accordance with one aspect of the present invention includes: a filter pair constituted by a first filter and a second filter which are arranged along with each other and each of which includes a first port and a second port; a first directional coupler section including a first port and a second port arranged next to each other and a third port and a fourth port arranged next to each other, the first port of the first directional coupler section being connected to the first port of the first filter, the second port of the first directional coupler section being connected to the first port of the second filter; a second directional coupler section including a first port and a second port arranged next to each other and a third port and a fourth port arranged next to each other, the first port of the second directional coupler section being connected to the second port of the first filter, the second port of the second directional coupler section being connected to the second port of the second filter; a first converter section pair constituted by a first converter section and a second converter section which are arranged along with each other and each of which includes a first port and a second port, the first port of the first converter section being connected to the third port of the first directional coupler section, the first port of the second converter section being connected to the fourth port of the first directional coupler section; and a second converter section pair constituted by a third converter section and a fourth converter section which are arranged along with each other and each of which includes a first port and a second port, the first port of the third converter section being connected to the third port of the second directional coupler section, the first port of the fourth converter section being connected to the fourth port of the second directional coupler section.

In the above diplexer, the first and second filters of the filter pair, the first directional coupler section, the second directional coupler section, the first and second converter sections of the first converter section pair, and the third and fourth converter sections of the second converter section pair are constituted by respective waveguides, the waveguides are post-wall waveguides that have a first wide wall, a second wide wall, and narrow walls, the first wide wall and the second wide wall are a pair of conductor plates provided on opposite sides of a dielectric substrate, and each of the narrow walls is a post wall constituted by conductor posts passing through the dielectric substrate.

In order to attain the above object, a transmitting and receiving system in accordance with another aspect of the present invention is a transmitting and receiving system including a diplexer, a transmitter circuit, a receiver circuit, and an antenna circuit.

The above diplexer includes: a filter pair constituted by a first filter and a second filter which are arranged along with each other and each of which includes a first port and a second port; a first directional coupler section including a first port and a second port arranged next to each other and a third port and a fourth port arranged next to each other, the first port of the first directional coupler section being connected to the first port of the first filter, the second port of the first directional coupler section being connected to the first port of the second filter; a second directional coupler section including a first port and a second port arranged next to each other and a third port and a fourth port arranged next to each other, the first port of the second directional coupler section being connected to the second port of the first filter, the second port of the second directional coupler section being connected to the second port of the second filter; a first converter section pair constituted by a first converter section and a second converter section which are arranged along with each other and each of which includes a first port and a second port, the first port of the first converter section being connected to the third port of the first directional coupler section, the first port of the second converter section being connected to the fourth port of the first directional coupler section; and a second converter section pair constituted by a third converter section and a fourth converter section which are arranged along with each other and each of which includes a first port and a second port, the first port of the third converter section being connected to the third port of the second directional coupler section, the first port of the fourth converter section being connected to the fourth port of the second directional coupler section.

In the above diplexer, the first and second filters of the filter pair, the first directional coupler section, the second directional coupler section, the first and second converter sections of the first converter section pair, and the third and fourth converter sections of the second converter section pair are constituted by respective waveguides, the waveguides are post-wall waveguides that have a first wide wall, a second wide wall, and narrow walls, the first wide wall and the second wide wall are a pair of conductor plates provided on opposite sides of a dielectric substrate, and each of the narrow walls is a post wall constituted by conductor posts passing through the dielectric substrate.

In the transmitting and receiving system, the transmitter circuit is connected to an input converter section which is the first converter section or the second converter section, the receiver circuit is connected to an output converter section which is the third converter section or the fourth converter section, and the antenna circuit is connected to an input/output converter section, the input/output converter section being one of the first to fourth converter sections which is not the input converter section or the output converter section.

### Advantageous Effects of Invention

The present invention makes it possible to provide a diplexer which is smaller and more lightweight than conventional diplexers.

### Brief Description of Drawings

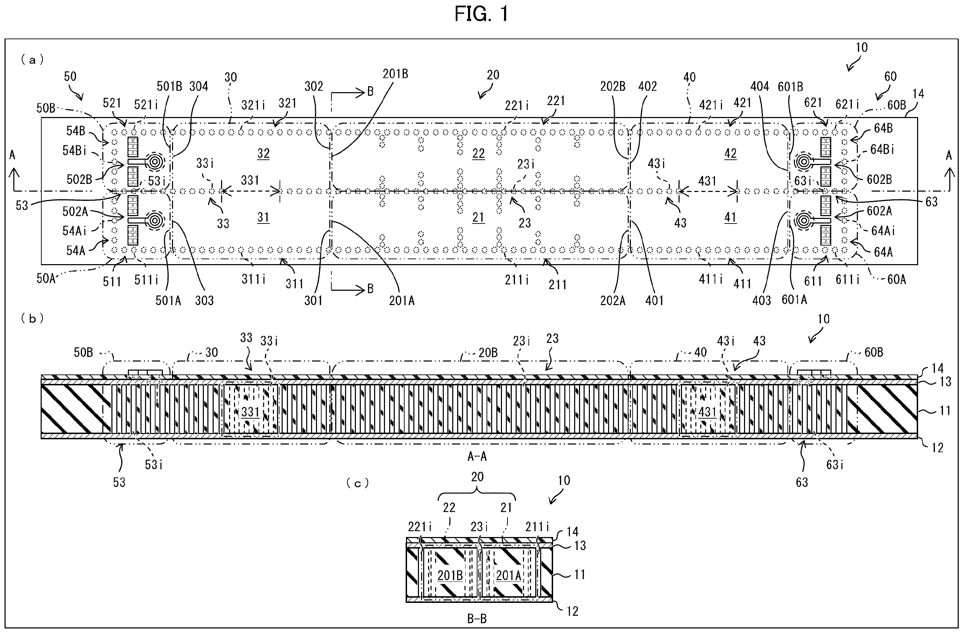

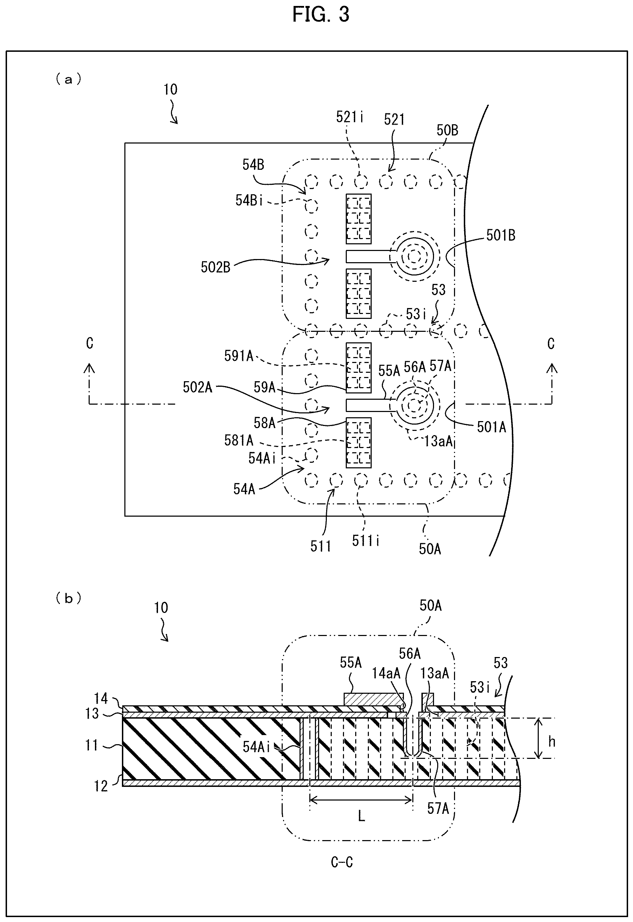

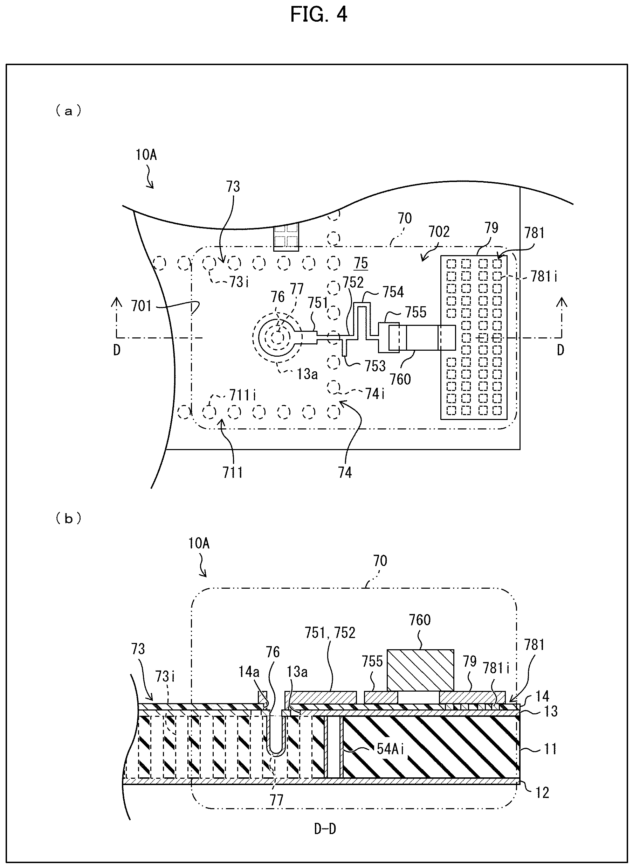

(a) of Fig. 1 is a plan view of a diplexer in accordance with Embodiment 1 of the present invention. (b) and (c) of Fig. 1 are cross-sectional views of the diplexer illustrated in (a) of Fig. 1.

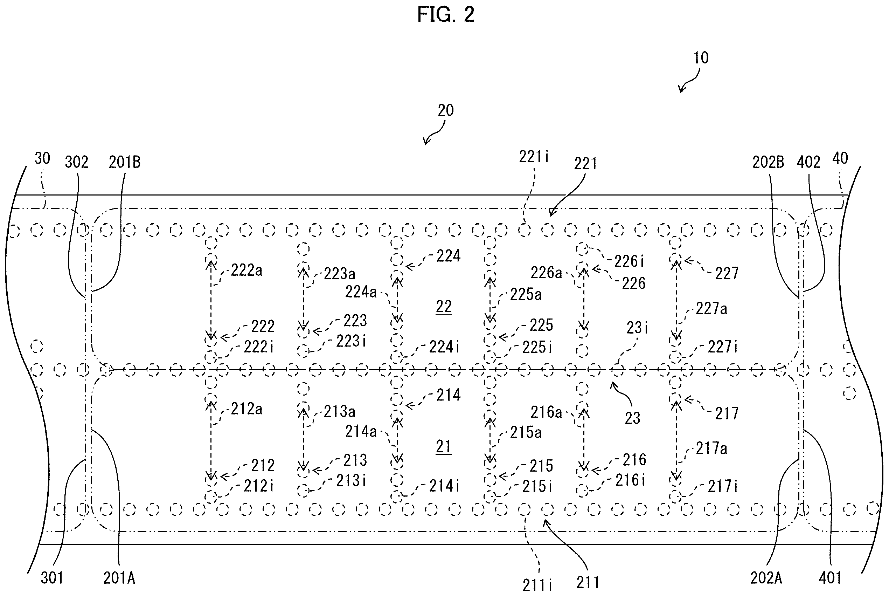

Fig. 2 is a plan view of a directional coupler section of the diplexer illustrated in Fig. 1.
(a) of Fig. 3 is a plan view of converter sections of the diplexer illustrated in Fig. 1. (b) of Fig. 3 is a cross-sectional view of a converter section illustrated in (a) of Fig. 3.
(a) of Fig. 4 is a plan view of a terminal section of a diplexer which is Variation 1. (b) of Fig. 4 is a cross-sectional view of the terminal section illustrated in (a) of Fig. 4.
Fig. 5 is a plan view illustrating a terminal section of a diplexer which is Variation 2.
Fig. 6 is a plan view of a directional coupler section of a diplexer which is Variation 3.
(a) of Fig. 7 is a block diagram illustrating a transmitting and receiving system in accordance with Embodiment 2 of the present invention. (b) of Fig. 7 is a block diagram of a variation of the transmitting and receiving system illustrated in (a) of Fig. 7.
Fig. 8 is a graph showing S-parameters in a transmitting and receiving system in Example 1 of the present invention.
(a) and (b) of Fig. 9 are graphs showing return losses at converter sections of transmitting and receiving systems in Group of Examples 2 and Group of Examples 3 of the present invention.
Fig. 10 is a graph showing return losses at converter sections of transmitting and receiving systems in Examples 4 and 5 of the present invention.

### Description of Embodiments

### [Embodiment 1]

The following description will discuss a diplexer 10 in accordance with Embodiment 1 of the present invention with reference to Figs. 1 and 2.

(a) of Fig. 1 is a plan view of the diplexer 10. (b) and (c) of Fig. 1 are cross-sectional view of the diplexer 10. (b) of Fig. 1 is a cross-sectional view taken along line A-A in (a) of Fig. 1. (c) of Fig. 1 is a cross-sectional view taken along line B-B in (a) of Fig. 1. Fig. 2 is a plan view of a filter pair 20 of the diplexer 10. (a) of Fig. 3 is a plan view of converter sections 50A and 50B of the diplexer 10. (b) of Fig. 3 is a cross-sectional view of the converter section 50A taken along line C-C in (a) of Fig. 3.

### (Constituents of diplexer 10)

As illustrated in (a) of Fig. 1, the diplexer 10 includes the filter pair 20, directional coupler sections 30 and 40, and converter section pairs 50 and 60. As illustrated in (b) and (c) of Fig. 1, these constituents of the diplexer 10 are constituted by a dielectric substrate 11, conductor plates 12 and 13, and a dielectric layer 14.

The dielectric substrate 11 is a single substrate made of quartz, and is shared by the filter pair 20, the directional coupler sections 30 and 40, and the converter section pairs 50 and 60, which are constituents of the diplexer 10. The material for the dielectric substrate 11 is not limited to quartz, and may be a glass material other than quartz or may be a resin material such as glass epoxy resin.

The dielectric substrate 11 has regularly arranged through-holes each passing through the dielectric substrate 11 from front to back of the dielectric substrate 11. The through-holes each have a tube-shaped metal (e.g., cupper) conductor film on the inner wall thereof. That is, the through-holes each have a metal conductor post formed inside thereof. In Embodiment 1, the diameter of each conductor post is 100 microns, and the distance between adjacent conductor posts (distance between the centers of adjacent conductor posts) is 200 microns.

Conductor posts regularly arranged in the above manner serve as post walls that reflect high frequency signals which are electromagnetic waves propagating through the dielectric substrate 11. Specifically, these conductor posts constitute narrow walls for the filter pair 20, the directional coupler sections 30 and 40, and the converter section pairs 50 and 60. The layouts of the post walls for the filter pair 20, the directional coupler sections 30 and 40, and the converter section pairs 50 and 60 will be described later.

The conductor plates 12 and 13, which are a pair of conductor plates, are disposed on the opposite sides (front and back) of the dielectric substrate 11. The conductor plates 12 and 13 are cupper conductor plates. The material for the conductor plates 12 and 13 is not limited to cupper, and may be a metal material other than copper (e.g., aluminum).

The waveguides constituting the filters of the filter pair 20, the directional coupler sections 30 and 40, and the converter sections of the converter section pairs 50 and 60, respectively, have the conductor plate 13 as a first wide wall and the conductor plate 12 as a second wide wall.

As described above, four of the six faces of the filter pair 20 are constituted by aforementioned narrow walls and aforementioned pair of wide walls, and four of the six faces of each of the directional coupler sections 30 and 40 are constituted by aforementioned narrow walls and aforementioned pair of wide walls. Five of the six faces of each of the converter section pairs 50 and 60 are constituted by aforementioned narrow walls and aforementioned pair of wide walls. Among the narrow walls of the converter section pairs 50 and 60, narrow walls opposite from first ports 501A, 501B, 601A, and 601B are specifically referred to as short walls 54A, 54B, 64A, and 64B.

The dielectric layer 14 is a conductor layer made of a polyimide resin and disposed on a surface of the conductor plate 13 (first wide wall). The material for the dielectric layer 14 may be a resin material other than polyimide resin.

### (Filter pair 20)

As illustrated in (a) of Fig. 1, the filter pair 20 is made up of a filter 21, which is a first filter, and a filter 22, which is a second filter, arranged along with each other. The filter 21 and the filter 22 share a narrow wall 23. The filter 21 includes a narrow wall 211 opposite from the narrow wall 23. Similarly, the filter 22 includes a narrow wall 221 opposite from the narrow wall 23.

### (Filter 21)

The filter 21 is a kind of waveguide (rectangular waveguide), whose four faces are constituted by the conductor plates 12 and 13 (which constitute a pair of wide walls) and the narrow walls 211 and 23 (which are a pair of narrow walls).

The filter 21 is formed by six faces, two of which (opposite end faces of the filter 21, i.e., the faces other than those constituted by the conductor plates 12 and 13 and the narrow walls 211 and 23) serve as ports 201A and 202A for electromagnetic connection between the filter 21 and members outside the filter 21. The ports 201A and 202A correspond to the first port and the second port recited in the claims, respectively. As illustrated in (c) of Fig. 1, the port 201A, which is one of the end faces of the filter 21, is in the shape of a rectangle.

As illustrated in Fig. 2, six partition walls 212, 213, 214, 215, 216, and 217 are provided inside the filter 21. Each of the partition walls 212, 213, 214, 215, 216, and 217 is substantially perpendicular to each of the conductor plates 12 and 13 and substantially perpendicular to each of the narrow walls 211 and 23. Thus, the filter 21 is divided into seven compartments by the partition walls 212, 213, 214, 215, 216, and 217. The seven compartments of the filter 21 each serve as a resonator.

The partition wall 212 is constituted by four conductor posts 212i (i = 1, 2, 3, and 4) each passing through the dielectric substrate 11. Among these four conductor posts 212i, (1) two conductor posts 2121 and 2122 are arranged so as to project from the narrow wall 23 toward the narrow wall 211, (2) two conductor posts 2123 and 2124 are arranged so as to project from the narrow wall 211 toward the narrow wall 23, and (3) the conductor post 2122 and the conductor post 2123 are most-widely-spaced adjacent conductor posts 212i. That is, the conductor post 2122 and the conductor post 2123 have a gap 212a between them.

The partition wall 213 is constituted by four conductor posts 213i (i = 1, 2, 3, and 4). Among these four conductor posts 213i, (1) two conductor posts 2131 and 2132 are arranged so as to project from the narrow wall 23 toward the narrow wall 211, (2) two conductor posts 2133 and 2134 are arranged so as to project from the narrow wall 211 toward the narrow wall 23, and (3) the conductor post 2132 and the conductor post 2133 are most-widely-spaced adjacent conductor posts 213i. That is, the conductor post 2132 and the conductor post 2133 have a gap 213a between them.

The partition wall 214 is constituted by six conductor posts 214i (i = 1, 2, 3, 4, 5, and 6). Among these six conductor posts 214i, (1) three conductor posts 2141 to 2143 are arranged so as to project from the narrow wall 23 toward the narrow wall 211, (2) three conductor posts 2144 to 2146 are arranged so as to project from the narrow wall 211 toward the narrow wall 23, and (3) the conductor post 2143 and the conductor post 2144 are most-widely-spaced adjacent conductor posts 214i. That is, the conductor post 2143 and the conductor post 2144 have a gap 214a between them.

The partition wall 215 is structured in the same manner as the partition wall 214. Specifically, in the partition wall 215, there is a gap 215a that is equal in width to the gap 214a.

The partition wall 216 is structured in the same manner as the partition wall 213. Specifically, in the partition wall 216, there is a gap 216a that is equal in width to the gap 213a.

The partition wall 217 is structured in the same manner as the partition wall 212. Specifically, in the partition wall 217, there is a gap 217a that is equal in width to the gap 212a.

Each of the gaps 212a, 213a, 214a, 215a, 216a, and 217a serves as an inductive window that controls the strength of coupling between adjacent resonators. As the width of each of the gaps 212a, 213a, 214a, 215a, 216a, and 217a becomes greater, the strength of coupling between adjacent resonators becomes greater.

In Embodiment 1, the widths of the gaps 212a, 213a, 214a, 215a, 216a, and 217a become smaller with increasing distance from each of the ports 201A and 202A, which are the opposite end faces of the filter 21.

In the filter 21 configured as described above, when a high frequency signal is externally supplied and coupled to the port 201A and propagates toward the port 202A, the filter 21 allows passage of a high frequency signal's component whose frequency falls within a passband (predetermined band). The filter 21 reflects a high frequency signal's component whose frequency does not fall within the passband. That is, the filter 21 serves as a band-pass filter (BPF) that allows passage of high frequency signals whose frequency falls within the passband.

The transmission characteristics of the filter 21 can be controlled by controlling parameters such as the number of resonators in the filter and/or the strength of coupling between adjacent resonators. That is, by controlling the number of partition walls and/or the widths of gaps in the filter 21, it is possible to design the filter 21 so that the passband has a desired lower limit frequency and a desired upper limit frequency.

### (Filter 22)

The filter 22 is configured in a similar manner to the filter 21. Therefore, the following description will only discuss the relationship between the filter 22 and the filter 21, and the details of the filter 22 are omitted.

The filter 22 is a kind of waveguide (rectangular waveguide), whose four faces are constituted by the conductor plates 12 and 13 (which constitute a pair of wide walls) and the narrow walls 221 and 23 (which are narrow walls).

The filter 22 is formed by six faces, two of which (opposite end faces of the filter 22, i.e., the faces other than those constituted by the conductor plates 12 and 13 and the narrow walls 221 and 23) serve as ports 201B and 202B. The ports 201B and 202B correspond to the first port and the second port recited in the claims, respectively. As illustrated in (c) of Fig. 1, the port 201B, which is one of the end faces of the filter 22, is in the shape of a rectangle.

That is, (1) the narrow wall 221 of the filter 22 corresponds to the narrow wall 211 of the filter 21, and (2) the ports 201B and 202B of the filter 22 correspond to the ports 201A and 202A of the filter 21.

As illustrated in Fig. 2, six partition walls 222, 223, 224, 225, 226, and 227 are provided inside the filter 22. Thus, the filter 22 is divided into seven compartments by the partition walls 222, 223, 224, 225, 226, and 227. The partition walls 222, 223, 224, 225, 226, and 227 of the filter 22 correspond to the partition walls 212, 213, 214, 215, 216, 217 of the filter 21, respectively.

That is, the partition walls 222, 223, 224, 225, 226, and 227 have gaps 222a, 223a, 224a, 225a, 226a, and 227a, respectively. The widths of the gaps 222a, 223a, 224a, 225a, 226a, and 227a become smaller with increasing distance from each of the ports 201B and 202B, which are the opposite end faces of the filter 22.

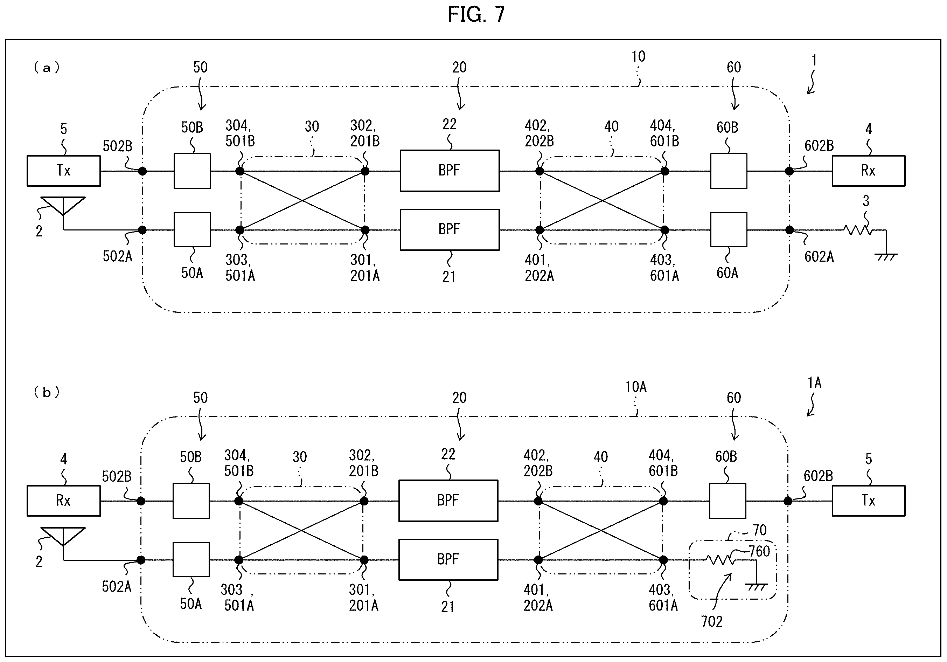

The transmission characteristics of the filters 21 and 22 may be selected appropriately depending on the operation bands of a transmitter and a receiver connected to the diplexer 10. For example, in a case where an antenna 2, a transmitter circuit (Tx) 5, and a receiver circuit (Rx) 4 are connected to converter sections 50A, 50B, and 60B of the diplexer 10, respectively, like a transmitting and receiving system 1 illustrated in (a) of Fig. 7, the filters 21 and 22 may be configured so as to allow passage of high frequency signals falling within the operation band of the Rx 4 and reflect high frequency signals falling within the operation band of the Tx 5.

It should be noted that the operation band of the Rx 4 and the operation band of the Tx 5 do not overlap each other. For example, in a case where the operation band of the Rx 4 and the operation band of the Tx 5 both fall within the E band, the operation band of the Rx 4 may be a 71-76 GHz band (center frequency: 73.5 GHz) and the operation band of the Tx 5 may be a 81-86 GHz band (center frequency: 83.5 GHz).

### (Directional coupler section 30)

The directional coupler section 30, which is a first directional coupler section, includes a port 301 and a port 302, which are first and second ports, respectively, arranged next to each other, and a port 303 and a port 304, which are third and fourth ports, respectively, arranged next to each other.

As illustrated in (a) of Fig. 1, the port 301 is connected to the port 201A of the filter 21, and the port 302 is connected to the port 201B of the filter 22. The port 303 is connected to the port 501A of the converter section 50A (described later), and the port 304 is connected to the port 501B of the converter section 50B (described later).

The directional coupler section 30 includes a waveguide 31, which is a rectangular waveguide, and a waveguide 32, which is a rectangular waveguide. The waveguide 31 and the waveguide 32 share a narrow wall 33 (first narrow wall) that has a gap 331 in the center of its length (see (b) of Fig. 1). The waveguides 31 and 32 have narrow walls 311 and 321 (second narrow walls), respectively, each of which is opposite from the narrow wall 33. That is, the waveguide 31 and the waveguide 32 are post-wall waveguides.

A pair of wide walls for the waveguide 31 is constituted by the conductor plates 12 and 13. The narrow wall 33 and the narrow wall 311 for the waveguide 31 are constituted by conductor posts 33i and conductor posts 311i, respectively. Similarly, a pair of wide walls for the waveguide 32 is constituted by the conductor plates 12 and 13. The narrow wall 33 and the narrow wall 321, which are a pair of narrow walls, are constituted by the conductor posts 33i and conductor posts 321i, respectively.

The conductor posts 33i, 311i, and 321i are configured similarly to the conductor posts 23i, 211i, and 221i which constitute the filter pair 20, respectively.

Conductor posts 33i adjacent to each other with the gap 331 between them are most-widely-spaced adjacent conductor posts 33i. The gap 331 serves as an inductive window through which the waveguide 31 and the waveguide 32 are coupled. Due to the gap 331 in the narrow wall 33, for example, a high frequency signal coupled to the port 301 is distributed from the waveguide 31 also to the waveguide 32 through the gap 331, while propagating from the port 301 toward the port 303. It follows that the high frequency signal coupled to the port 301 reaches not only the port 303 but also the port 304.

By optimizing the width of the gap 331, the shapes of waveguides 31 and 32, and/or the like, it is possible to achieve a coupling factor of 3 dB between the waveguide 31 and the waveguide 32. The directional coupler section 30 is a 3 dB directional coupler section whose coupling factor is 3 dB. In a case of a 3 dB directional coupler section, when a high frequency signal is coupled to the port 301, the electric field strength of the high frequency signal reaching the port 303 and the electric field strength of the high frequency signal reaching the port 304 are equal to each other.

The configuration of the directional coupler section 30 is not limited to that illustrated in (a) of Fig. 1. Specifically, any directional coupler section can be used as the directional coupler section 30, provided that the directional coupler section is produced using a post-wall waveguide technique.

### (Directional coupler section 40)

The directional coupler section 40, which is a second directional coupler section, is configured in a similar manner to the directional coupler section 30. Therefore, the following description will only discuss the relationship between the directional coupler section 40 and the directional coupler section 30, and the details of the directional coupler section 40 are omitted.

The directional coupler section 40 includes a port 401 and a port 402, which are first and second ports, respectively, arranged next to each other, and a port 403 and a port 404, which are third and fourth ports, respectively, arranged next to each other. The ports 401 to 404 of the directional coupler section 40 correspond to the ports 301 to 304 of the directional coupler section 30, respectively.

The port 401 is connected to the port 202A of the filter 21, and the port 402 is connected to the port 202B of the filter 22. The port 403 is connected to the port 601A of the converter section 60A (described later), and the port 404 is connected to the port 601B of the converter section 60B (described later).

The directional coupler section 40 includes a waveguide 41, which is a first rectangular waveguide, and a waveguide 42, which is a second rectangular waveguide. The waveguides 41 and 42 of the directional coupler section 40 correspond to the waveguides 31 and 32 of the directional coupler section 30, respectively. That is, narrow walls 43, 411, and 421 of the directional coupler section 40 correspond to the narrow walls 33, 311i, and 321i of the directional coupler section 30, respectively.

The directional coupler section 40 is a 3 dB directional coupler section, as with the directional coupler section 30.

### (Convertor pair 50)

The converter section pair 50, which is a first converter section pair, is constituted by the converter section 50A and the converter section 50B arranged along with each other. The converter sections 50A and 50B are the first and second converter sections recited in the claims, respectively.

### (Convertor 50A)

As illustrated in (a) of Fig. 1, the converter section 50A includes the port 501A, which is a first port, and a port 502A, which is a second port. The port 501A is connected to the port 303 of the directional coupler section 30.

The converter section 50A includes a waveguide (rectangular waveguide), whose five faces are constituted by: conductor plates 12 and 13, which constitute a pair of wide walls; narrow walls 53 and 511, which are a pair of narrow walls; and the short wall 54A. The short wall 54A is one of the post walls constituting the narrow walls of the converter section 50A, but is referred to as a short wall for distinction from the pair of narrow walls 53 and 511 opposite from each other. The short wall 54A is a narrow wall opposite from the port 501A. This waveguide is a post-wall waveguide. As with the narrow walls 53 and 511, the short wall 54A is a post wall constituted by conductor posts 54Ai.

The waveguide of the converter section 50A is formed by six faces, one of which (one of the opposite end faces of the converter section 50A, i.e., the face other than those constituted by the conductor plates 12 and 13, narrow walls 511 and 53, and short wall 54A) serves as the port 501A for electromagnetic connection between the converter section 50A and members outside the converter section 50A.

As illustrated in (a) and (b) of Fig. 3, the converter section 50A includes the dielectric layer 14, a signal line 55A, a pad 56A, a blind via 57A, and electrodes 58A and 59A.

The dielectric layer 14 is provided on a surface of the conductor plate 13, which is the first wide wall. The dielectric layer 14 is provided so as to cover the surface of the conductor plate 13. The dielectric layer 14 is a single dielectric layer that is shared also by the converter section 50B, the converter section 60A, and the converter section 60B, which will be described later. The dielectric layer 14 has an opening 14aA that overlaps the waveguide constituting the converter section 50A.

The conductor plate 13, which is the first wide wall for the converter section 50A, has an opening 13aA that overlaps the opening 14aA. In Embodiment 1, the opening 13aA is formed such that the opening 13aA includes the opening 14aA within its range. The opening 13aA serves as an anti-pad. As has been described, the opening 14aA and the opening 13aA are each provided in a region that overlaps the waveguide of the converter section 50A.

The signal line 55A is a long narrow conductor disposed on a surface of the dielectric layer 14. One end portion of the signal line lies in a region that surrounds the opening 14aA and that overlaps the opening 13aA. The signal line 55A and the conductor plate 13 form a microstrip line.

The pad 56A is a circular conductor layer provided on the surface of the dielectric substrate 11 on which the conductor plate 13 is provided. The pad 56A is located inside the opening 13aA in the conductor plate 13 and insulated from the conductor plate 13.

The dielectric substrate 11 has a non-through-hole extending inward from the surface on which the conductor plate 13 is provided. The blind via 57A is constituted by a tube-shaped conductor film disposed on the inner wall of the non-through-hole. The blind via 57A is connected to the one end portion of the signal line 55A via the pad 56A so that the blind via 57A and the signal line 55A are in electrical communication with each other. Specifically, the blind via 57A is connected to the one end of the signal line 55A and is formed in the dielectric substrate 11 through the openings 13aA and 14aA.

The electrodes 58A and 59A are disposed on the surface of the dielectric layer 14. The electrodes 58A and 59A are located near the other end portion of the signal line 55A such that the other end portion of the signal line 55A lies between the electrodes 58A and 59A.

The dielectric layer 14 has through-holes in a region that overlaps the electrode 58A. The through-holes are filled with a conductor to serve as vias 581A. The vias 581A achieve a short circuit between the electrode 58A and conductor plate 13.

Vias 591A, which are configured similarly to the vias 581A, achieve a short circuit between the electrode 59A and the conductor plate 13.

The other end portion of the signal line 55A and the electrodes 58A and 59A, which are arranged as described above, form the port 502A of the converter section 50A. The converter section 50A is capable of converting the mode of a high frequency signal coupled to the port 501A (high frequency signal having propagated through the waveguide 31) into the mode of a high frequency signal that is to propagate through the signal line 55A and the conductor plate 13, which constitute the microstrip line.

As illustrated in (a) of Fig. 3, the port 502A is constituted by: the signal line 55A, which is a constituent of the microstrip line; and the electrodes 58A and 59A, which are grounded and between which the other end portion of the signal line 55A is located. Therefore, a transmitter circuit that transmits high frequency signals, a receiver circuit that receives high frequency signals, or an antenna circuit that transmits or receives high frequency signals can be easily connected to the port 502A. It is preferable that the distance between the other end portion of the signal line 55A and the electrode 58A and the distance between the other end portion of the signal line 55A and the electrode 59A are selected so that the electrodes match the shape of a terminal of the transmitter circuit, receiver circuit, or antenna circuit connected to the port 502A. In the following descriptions, (1) a converter section to which a transmitter circuit is connected is referred to as an input converter section, (2) a converter section to which a receiver circuit is connected is referred to as an output converter section, and (3) a converter section to which an antenna circuit is connected is referred to as an input/output converter section.

In a case where the port 502A is not connected with a transmitter circuit, a receiver circuit, or an antenna circuit, the port 502A preferably further includes a resistor (not illustrated in Fig. 3). The resistor brings the other end portion of the signal line 55A and the electrodes 58A and 59A, which constitute the port 502A, into electrical communication with each other. With the resistor which brings the other end portion of the signal line 55A and the electrodes 58A and 59A into electrical communication with each other, the port 502A is terminated. As such, the port 502, which further includes the resistor, functions as an isolation port.

According to the above configuration, the port 502 is capable of reducing unnecessary reflection of a high frequency signal which would occur at the isolation port.

### (Convertor 50B)

The converter section 50B is configured in a similar manner to the foregoing converter section 50A. Therefore, the following description will only discuss the relationship between the converter section 50B and the converter section 50A, and the details of the converter section 50B are omitted.

As illustrated in (a) of Fig. 1, the converter section 50B includes the port 501B and a port 502B. The port 501B and the port 502B of the converter section 50B correspond to the port 501A and the port 502A of the converter section 50A, respectively. The port 501B is connected to the port 304 of the directional coupler section 30.

The converter section 50B includes a waveguide (rectangular waveguide), whose five faces are constituted by: the conductor plates 12 and 13, which constitute a pair of wide walls; narrow walls 53 and 521, which are a pair of narrow walls; and the short wall 54B. The short wall 54B is one of the post walls constituting the narrow walls of the converter section 50B, but is referred to as a short wall for distinction from the pair of narrow walls 53 and 521 opposite from each other. The short wall 54B is a narrow wall opposite from the port 502A. This waveguide is a post-wall waveguide. As with the narrow walls 53 and 521, the short wall 54B is a post wall constituted by conductor posts 54Bi.

The converter section 50B includes constituents corresponding to the signal line 55A, the pad 56A, the blind via 57A, and the electrodes 58A and 59A of the converter section 50A. The port 502B is constituted by: the other end portion of a signal line corresponding to the signal line 55A of the converter section 50A; and electrodes corresponding to the electrodes 58A and 59A of the converter section 50A.

As with the case with the port 502A, a transmitter circuit, a receiver circuit, or an antenna circuit can be connected to the port 502B, or a resistor can be connected to the port 502B.

### (Convertor pair 60)

The converter section pair 60, which is a second converter section pair, is constituted by the converter section 60A and the converter section 60B arranged along with each other. The converter sections 60A and 60B are the third and fourth converter sections recited in the claims, respectively.

The converter section pair 60 is configured in a similar manner to the foregoing converter section pair 50. Therefore, the following description will only discuss the relationship between the converter section pair 60 and the converter section pair 50 and the details of the converter section pair 60 are omitted.

The converter section 60A of the converter section pair 60 corresponds to the converter section 50A of the converter section pair 50, and the converter section 60B of the converter section pair 60 corresponds to the converter section 50B of the converter section pair 50.

As illustrated in (a) of Fig. 1, the converter section 60A includes the port 601A and a port 602A. The port 601A is connected to the port 403 of the directional coupler section 40.

The converter section 60A includes a waveguide (rectangular waveguide), whose five faces are constituted by: the conductor plates 12 and 13, which constitute a pair of wide walls; narrow walls 63 and 611, which are a pair of narrow walls; and the short wall 64A.

The converter section 60A includes constituents corresponding to the signal line 55A, the pad 56A, the blind via 57A, and the electrodes 58A and 59A of the converter section 50A. The port 602A is constituted by: the other end portion of a signal line corresponding to the signal line 55A of the converter section 50A; and two electrodes corresponding to the electrodes 58A and 59A of the converter section 50A.

As with the case with the port 502A, a transmitter circuit, a receiver circuit, or an antenna circuit can be connected to the port 602A, or a resistor can be connected to the port 602A.

Similarly, the converter section 60B includes the port 601B and a port 602B. The port 601B is connected to the port 404 of the directional coupler section 40.

The converter section 60B includes a waveguide (rectangular waveguide), whose five faces are constituted by: the conductor plates 12 and 13, which constitute a pair of wide walls; narrow walls 63 and 621, which are a pair of narrow walls; and the short wall 64B.

The converter section 60B includes constituents corresponding to the signal line 55A, the pad 56A, the blind via 57A, and the electrodes 58A and 59A of the converter section 50A. The port 602B is constituted by: the other end portion of a signal line corresponding to the signal line 55A of the converter section 50A; and two electrodes corresponding to the electrodes 58A and 59A of the converter section 50A.

As with the case with the port 502A, a transmitter circuit, a receiver circuit, or an antenna circuit can be connected to the port 602B, or a resistor can be connected to the port 602B.

In the diplexer 10, the ports 502A, 502B, 602A, and 602B of the respective converter sections 50A, 50B, 60A, and 60B configured like above each function as a port for connection between the diplexer 10 and an external apparatus.

### (Length h of blind via)

In the foregoing input converter section, a length h (see (b) of Fig. 3) of the blind via 57A is preferably not less than 13% and not more than 20% of a guide wavelength λgt. With the input converter section configured like above, it is possible to further reduce the reflection coefficient, |S11|, for a high frequency signal having the center frequency of the transmitter circuit.

The length of the blind via of the foregoing output converter section is preferably not less than 13% and not more than 20% of a guide wavelength λgr. With the output converter section configured like above, it is possible to further reduce the reflection coefficient, |S11|, for a high frequency signal having the center frequency of the receiver circuit.

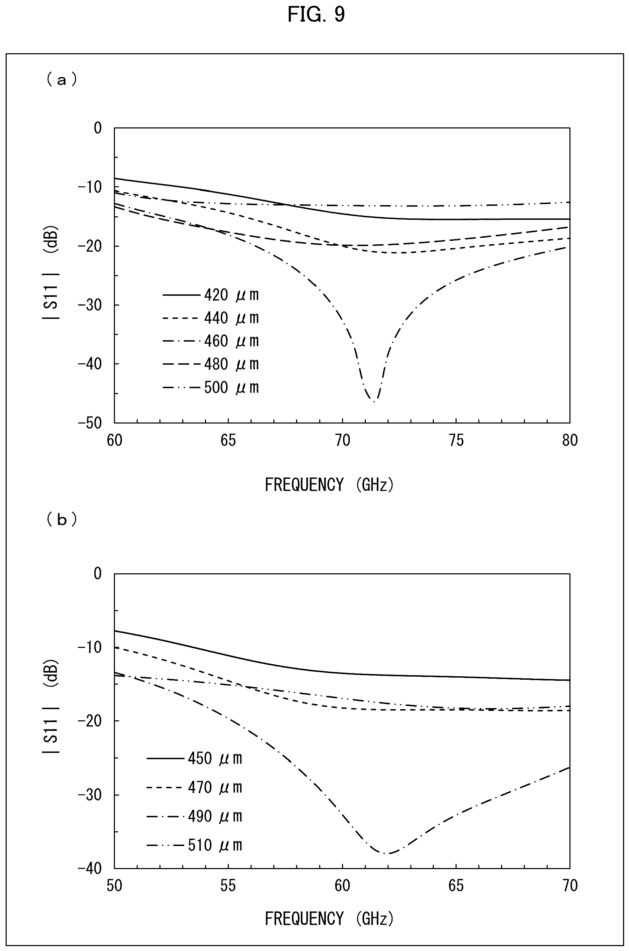

The frequency dependence of reflection coefficients for different lengths h (such frequency dependence is hereinafter referred to as reflection characteristics) will be described later in Group of Examples 1 and Group of Examples 3 with reference to Fig. 9.

### (Distance L between blind via and short wall)

One possible configuration in which the diplexer 10 is used is an aspect in which a transmitter circuit, a receiver circuit, an antenna circuit, and a resistor are connected to the converter sections 50A, 50B, 60A, and 60B (this aspect will be described later). The operation of the diplexer 10 to which a transmitter circuit, a receiver circuit, an antenna circuit, and a resistor are connected will be described later with reference to Fig. 7.

In the input converter section to which a transmitter circuit is connected, a distance L (see (b) of Fig. 3) between the blind via 57A and the short wall 54A is preferably not less than 14% and not more than 20% of the guide wavelength λgt of the high frequency signal having the center frequency of the operation band of the transmitter circuit.

The length L in the output converter section to which a receiver circuit is connected is preferably not less than 14% and not more than 20% of the guide wavelength λgr of the high frequency signal having the center frequency of the operation band of the receiver circuit.

With the input converter section and output converter section configured like above, in a case where the diplexer is put in operation with (1) a transmitter circuit connected to the input converter section and (2) a receiver circuit connected to the output converter section, it is possible to (1) reduce the return loss in one of the operation bands of the receiver circuit and the transmitter circuit and (2) increase the return loss in the other of the operation bands of the transmitter circuit and the receiver circuit. That is, it is possible to increase the difference between the return loss in the operation band of the receiver circuit and the return loss in the operation band of the transmitter circuit. As such, it is possible to improve isolation characteristics between the input converter section and the output converter section.

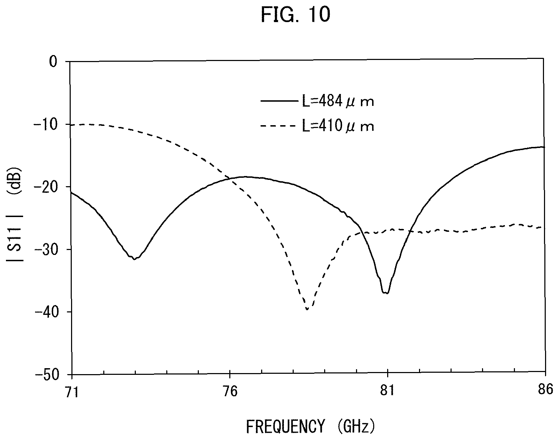

The frequency dependence of reflection coefficients for different distances L (such frequency dependence is hereinafter referred to as reflection characteristics) will be described later with reference to Fig. 10.

Also in the input/output converter section to which an antenna circuit is connected, the distance L is preferably not less than 14% and not more than 20% of a guide wavelength λga of a high frequency signal having the center frequency of the operation band of the antenna circuit. With this configuration, it is possible to reduce the return loss of the input/output converter section in the operation band of the antenna circuit. The operation band of the antenna circuit is a band within which both the operation band of the receiver circuit and the operation band of the transmitter circuit fall. For example, in a case where the operation band of the Rx 4 is the 71-76 GHz band (center frequency: 73.5 GHz) and the operation band of the Tx4 is the 81-86 GHz band (center frequency: 83.5 GHz), the operation band of the antenna circuit ranges from not less than 71 GHz to not more than 86 GHz. Accordingly, the center frequency of the operation band of the antenna circuit is 78.5 GHz.

### [Variation 1]

As described earlier, in a case where a transmitter circuit, a receiver circuit, and an antenna are connected to the converter sections 50A, 50B, 60A, and 60B, a port not connected with the transmitter circuit, the receiver circuit, or the antenna is preferably terminated. This is to prevent unnecessary reflection that would occur at the port not connected with anything.

For example, for the converter section 50A illustrated in (a) of Fig. 3 to be terminated, the following configuration may be employed: the other end portion of the signal line 55A and at least one of the electrodes 58A and 59A (the other end portion of the signal line 55A and the electrodes 58A and 59A are constituents of the port 502A) are connected together (put into electrical communication with each other) with the use of a resistor. The port 502A configured like above functions as an isolation port.

A diplexer 10A, which is Variation 1 of the present invention, includes a terminal section 70, which is a variation of the foregoing converter section (e.g., converter section 50A). The terminal section 70 is obtained by adding a resistor, via which the signal line and the electrode(s) are in electrical communication with each other, to one of the converter sections 50A, 50B, 60A, and 60B. That is, the terminal section 70 is a terminated converter section. The terminal section 70 further includes a configuration that reduces reflection.

The following description will discuss such a terminal section 70 with reference to (a) of Fig. 4. (a) of Fig. 4 is a plan view of the terminal section 70.

Variation 1 exemplarily discusses a configuration in which the converter section 60A is modified into the terminal section 70. As illustrated in (a) of Fig. 4, the terminal section 70 includes a port 701 and a port 702. The ports 701 and 702 of the terminal section 70 correspond to the ports 501A and 502A of the converter section 50A, respectively.

The terminal section 70 includes a waveguide (rectangular waveguide), whose five faces are constituted by: the conductor plates 12 and 13, which constitute a pair of wide walls; narrow walls 711 and 73, which are a pair of narrow walls; and a short wall 74.

The terminal section 70 includes a signal line 75, a pad 76, a blind via 77, and an electrode 79, which correspond to the signal line 55A, the pad 56A, the blind via 57A, and the electrodes 58A and 59A of the converter section 50A. The pad 76 and the blind via 77 correspond to the pad 56A and the blind via 57A, respectively, and descriptions therefor are omitted here.

The dielectric layer 14 has an opening 14a corresponding to the opening 14aA illustrated in Fig. 3. The conductor plate 13 has an opening 13a corresponding to the opening 13aA illustrated in Fig. 3.

The signal line 75 includes: a wide portion 751 constituting one end portion of the signal line 75; a narrow portion 752 constituting an intermediate portion of the signal line 75; and a conductor pad 755 constituting the other end portion of the signal line 75.

The wide portion 751 is constituted by: a circular head portion; and a neck portion whose width is smaller than the diameter of the head portion. The narrow portion 752 is a long narrow conductor connected to the wide portion 751, and is smaller in width than the neck portion of the wide portion 751. The conductor pad 755 is a rectangular piece of conductor.

The electrode 79 is a rectangular piece of conductor that is larger in area than the electrodes 58A and 59A. The electrode 79 is configured in this manner in order to further reduce the resistance that would occur between the electrode 79 and the conductor plate 13 and to further stabilize the potential (ground potential) of the electrode 79. The dielectric layer 14 has through-holes in a region overlapping the electrode 79. The through-holes are filled with a conductor to serve as vias 781i. The vias 781i constitute a via group 781, which achieves a short circuit between the electrode 79 and the conductor plate 13.

The terminal section 70 further includes a resistor 760 for electrical communication between the conductor pad 755 and the electrode 79. The opposite ends of the resistor 760 are connected to the conductor pad 755 and the electrode 79, respectively, with a connection member (e.g., solder). Thus, the terminal section 70 is a terminated converter section. The resistor 760 may preferably be a chip resistor.

The narrow portion 752 has an open stub 753 and a meander portion 754, each of which is provided somewhere between the opposite ends of the narrow portion 752. The open stub 753 is a long narrow conductor. One end of the open stub 753 is connected somewhere between the opposite ends of the narrow portion 752, and the other end of the open stub 753 is open. The meander portion 754 is a long narrow conductor that is equal in width to the narrow portion 752, and is meandered so that the path length of the narrow portion 752 increases.

The terminal section 70 is configured such that, by adjusting the lengths of the open stub 753 and the meander portion, it is possible to control the input impedance (in a direction from the waveguide to the terminal section, i.e., in the direction from the port 701 toward the port 702) at a desired value. In other words, the terminal section 70 configured like above can further reduce reflection. Thus, the terminal section 70 is capable of restricting a high frequency signal, coupled from the port 403 of the directional coupler section 40, from being reflected at the terminal section 70 and becoming a reflected signal returning to the inside of the diplexer 10.

### [Variation 2]

A diplexer 10A, which is Variation 2 of the present invention, includes a terminal section 80 in place of the terminal section 70. The terminal section 80 is a variation of the terminal section 70, and is obtained by replacing the signal line 75 of the terminal section 70 with a signal line 85. That is, the terminal section 80 is configured in the same manner as the terminal section 70 except for the signal line 85. Therefore, the following description will only discuss the signal line 85, and descriptions for other members are omitted.

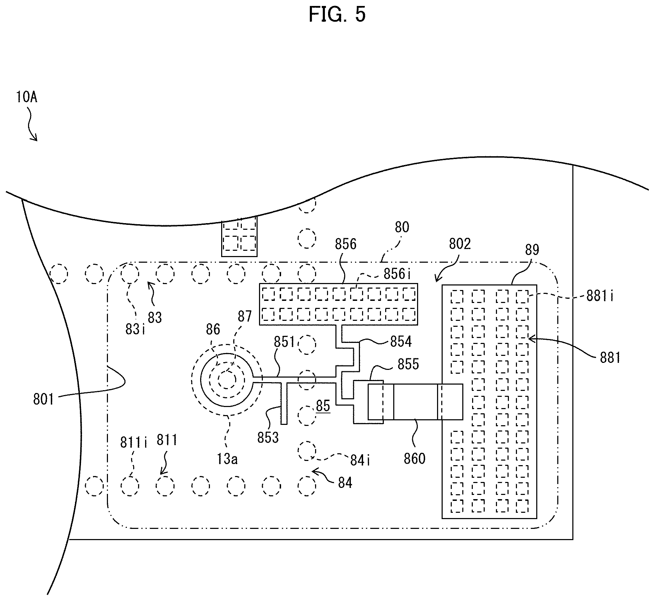

Fig. 5 is a plan view illustrating the terminal section 80 of the diplexer 10A. As illustrated in Fig. 5, the signal line 85 includes: a circular head portion constituting one end portion of the signal line 85; a narrow portion 851 constituting an intermediate portion of the signal line 85; and a conductor pad 855 constituting the other end portion of the signal line 85. The narrow portion 851 corresponds to the narrow portion 752 of the terminal section 70, the conductor pad 855 corresponds to the conductor pad 755 of the terminal section 70, an electrode 89 corresponds to the electrode 79 of the terminal section 70, a via group 881 constituted by vias 881i corresponds to the via group 781 of the terminal section 70, and a resistor 860 corresponds to the resistor 760 of the terminal section 70. The conductor pad 855 and the electrode 89 are in electrical communication with each other via the resistor 860.

The narrow portion 851 has an open stub 853 provided somewhere between the opposite ends of the narrow portion 851. The open stub 853 corresponds to the open stub 753 of the terminal section 70.

The narrow portion 851 further has a meander portion 854 provided somewhere between the opposite ends of the narrow portion 851. The meander portion 854 is a long narrow conductor that is equal in width to the narrow portion 851. One end of the meander portion 854 is connected somewhere between the opposite ends of the narrow portion 851. The other end of the meander portion 854 has a conductor pad 856. The conductor pad 856 is a rectangular piece of conductor, as with the electrode 89, and is short-circuited to the conductor plate 13 via vias 856i.

The meander portion 854 is meandered so that the path length of the narrow portion 851 increases as with the meander portion 754, and the other end of the meander portion 854 is grounded via the conductor pad 856. The meander portion 854 and the conductor pad 856 arranged like above function as a short stub.

The terminal section 80 is configured such that, by adjusting the length of the open stub 853 and adjusting the length of the meander portion 854 of the short stub, it is possible to control the impedance between the signal line 85 and the conductor plate 13 at a desired value. In other words, the terminal section 80 configured like above is capable of reducing reflection to a greater extent than the terminal section 70.

### [Variation 3]

A diplexer 10B, which is Variation 3 of the present invention, includes directional coupler sections 130 and 140, which are variations of the foregoing directional coupler sections 30 and 40. The directional coupler sections 130 and 140 can be obtained by making some modification to the narrow wall 33 and the narrow walls 311 and 321 of the directional coupler sections 30 and 40 and increasing the number of conductor posts of the directional coupler sections 30 and 40.

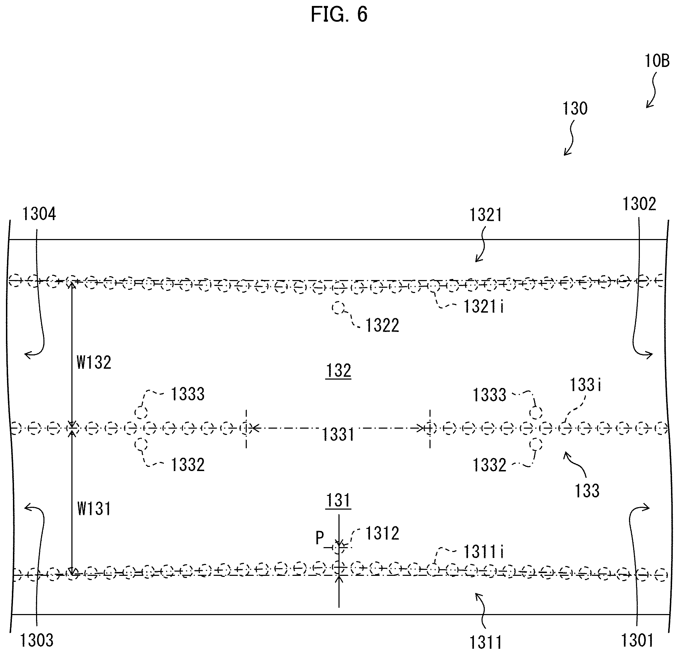

The following description will discuss the directional coupler section 130 with reference to Fig. 6. Fig. 6 is a plan view of the directional coupler section 130. The waveguides 131 and 132 of the directional coupler section 130 correspond to the waveguides 31 and 32 of the directional coupler section 30, respectively. Ports 1301 to 1304 of the directional coupler section 130 correspond to the ports 301 to 304 of the directional coupler section 30, respectively. A gap 1331 of the directional coupler section 130 corresponds to the gap 331 of the directional coupler section 30.

The waveguides 131 and 132 constituting the directional coupler section 130 share a narrow wall 133 having the gap 1331, and include narrow walls 1311 and 1321, respectively, each of which is opposite from the narrow wall 133. The gap 1331 in the narrow wall 133 is equally distanced from the ports 1301 and 1302 and from the ports 1303 and 1304.

When the directional coupler section 130 is viewed in a plan view, the waveguide 131 is sandwiched between the narrow wall 133 and the narrow wall 1311 which are a pair of narrow walls, whereas the waveguide 132 is sandwiched between the narrow wall 133 and the narrow wall 1321 which are a pair of narrow walls. The narrow wall 133, the narrow wall 1311, and the narrow wall 1321 are constituted by conductor posts 133i, conductor posts 1311i, and conductor posts 1321i, respectively.

In Fig. 6, the centers of the conductor posts 133i are connected together by an imaginary line (dot-dot-dash line), the centers of the conductor posts 1311i are connected together by an imaginary line, and the centers of the conductor posts 1321i are connected together by an imaginary line. These imaginary lines correspond to the post walls of the waveguides 131 and 132.

### (A pair of projections)

As illustrated in Fig. 6, the narrow wall 133 or the narrow wall 1311 of the waveguide 131 has a pair of projections which are symmetrically positioned with respect to the gap 1331 and one of which is on the same side of the gap 1331 as the port 1303 and the other of which is on the same side of the gap 1331 as the port 1301. In Embodiment 1, the pair of projections is provided at the narrow wall 133 and projects from the narrow wall 133 toward the narrow wall 1311. Note, however, that the pair of projections may be provided at the narrow wall 1311 and project from the narrow wall 1311 toward the narrow wall 133.

In Embodiment 1, the pair of projections is constituted by a pair of conductor posts 1332. In Embodiment 1, each of the pair of conductor posts 1332 is constituted by a single conductor post. Note, however, that each of the pair of conductor posts 1332 may be constituted by a plurality of conductor posts, depending on the amount of projection of the pair of projections from the narrow wall 133 toward the narrow wall 1311. The pair of conductor posts 1332 is positioned near the narrow wall 133, and constitutes a pair of projections projecting from the narrow wall 133.

Similarly, the narrow wall 133 or the narrow wall 1321 of the waveguide 132 has a pair of projections which are symmetrically positioned with respect to the gap 1331 and one of which is on the same side of the gap 1331 as the port 1304 and the other of which is on the same side of the gap 1331 as the port 1302. In Embodiment 1, the pair of projections is provided at the narrow wall 133 and projects from the narrow wall 133 toward the narrow wall 1321. Note, however, that the pair of projections may be provided at the narrow wall 1321 and project from the narrow wall 1321 toward the narrow wall 133.

In Embodiment 1, the pair of projections is constituted by a pair of conductor posts 1333. The pair of conductor posts 1333 is configured in the same manner as the foregoing pair of conductor posts 1332.

That is, the distance between the pair of projections projecting from the narrow wall 133 toward the narrow wall 1311 (i.e., the pair of projections in the waveguide 131) is equal to the distance between the pair of projections projecting from the narrow wall 133 toward the narrow wall 1321 (i.e., the pair of projections in the waveguide 132).

In the directional coupler section 130 configured as described above, a width W131 of the waveguide 131 and a width W132 of the waveguide 132 each become small in a discrete manner at positions at which the pair of projections are provided.

### (Protrusions in narrow walls 1311 and 1321)

As illustrated in Fig. 6, the narrow wall 1311 of the waveguide 131 is arranged such that the distance from the narrow wall 1311 to the narrow wall 133 gradually becomes small with decreasing distance from each end (port 1301 and port 1303) of the waveguide 131 to the center of the waveguide 131. In other words, the amount of protrusion P in the narrow wall 1311 in the waveguide 131 toward the narrow wall 133 is larger at the center of the waveguide 131 than at the ports 1301 and 1303.

The narrow wall 1311 further has, in the middle thereof (the position at which the amount of protrusion P in the narrow wall 1311 is maximum and which corresponds to the center of the waveguide 131), a single projection that projects from the narrow wall 1311 toward the narrow wall 133. In Embodiment 1, the single projection is constituted by one conductor post 1312. Note, however, that the single projection may be constituted by a plurality of conductor posts 1312, depending on the amount of protrusion P in the narrow wall 1311 toward the narrow wall 133. The conductor post 1312 is positioned near the narrow wall 1311 and constitutes a single projection that projects from the narrow wall 1311.

The narrow wall 1321 of the waveguide 132 is arranged in the same manner as the foregoing narrow wall 1311. That is, the narrow wall 1321 is arranged such that the distance from the narrow wall 1321 to the narrow wall 133 gradually becomes small with decreasing distance from each end (port 1302 and port 1304) of the waveguide 132 to the center of the waveguide 132.

The narrow wall 1321 has, in the middle thereof (the position at which the amount of protrusion P in the narrow wall 1321 is maximum and which corresponds to the center of the waveguide 132), a single projection that projects from the narrow wall 1321 toward the narrow wall 133. The single projection provided at the narrow wall 1321 is configured in the same manner as the single projection at the narrow wall 1311. In Embodiment 1, the single projection is constituted by one conductor post 1322.

In the waveguide 131 configured as described above, the width W131 of the waveguide 131 (1) continuously decreases with decreasing distance from the port 1301 to the center of the waveguide 131 and (2) continuously decreases with decreasing distance from the port 1303 to the center of the waveguide 131, except at the positions at which the foregoing pair of projections are provided and at the position at which the single projection is provided. Note that the width W131 becomes small in a discrete manner at positions at which the foregoing pair of projections are provided and at which the single projection is provided.

The narrow wall 1321 of the waveguide 132 is arranged in the same manner as the narrow wall 1311 of the waveguide 131. Therefore, the width W132 of the waveguide 132 (1) continuously decreases with decreasing distance from the port 1302 to the center of the waveguide 132 and (2) continuously decreases with decreasing distance from the port 1304 to the center of the waveguide 132, except at the positions at which the foregoing pair of projections are provided and at the position at which the single projection is provided. Note that the width W132 becomes small in a discrete manner at positions at which the foregoing pair of projections are provided and at which the single projection is provided.

The directional coupler section 130 configured as described above is capable of reducing return loss in the operation band to a greater extent than the directional coupler section 30.

### [Embodiment 2]

The following description will discuss a transmitting and receiving system 1 in accordance with Embodiment 2 of the present invention with reference to (a) of Fig. 7. (a) of Fig. 7 is a block diagram illustrating the transmitting and receiving system 1.

As illustrated in (a) of Fig. 7, the transmitting and receiving system 1 includes the diplexer 10 in accordance with Embodiment 1, an antenna 2, a resistor 3, a receiver circuit (Rx) 4, and a transmitter circuit (Tx) 5.

In the transmitting and receiving system 1, (1) the antenna 2 is connected to the port 502A of the converter section 50A, (2) the resistor 3 is connected to the port 602A of the converter section 60A such that the port 602A is terminated, (3) the Rx 4 is connected to the port 602B of the converter section 60B, and (4) the Tx 5 is connected to the port 502B of the converter section 50B. That is, the converter section 50A is an input/output converter section, the converter section 50B is an input converter section, and the converter section 60B is an output converter section.

The transmitting and receiving system 1 can be suitably used as a transmitting and receiving system that can deal with microwaves or millimeter waves. The transmitting and receiving system 1 is designed to carry out transmission and reception via high frequency signals in respective different bands. The high frequency signals are millimeter-wave signals such as those called 60 GHz band signals, 71-76 GHz band signals, and 81-86 GHz band signals. The 71-76 GHz band and the 81-86 GHz band fall within a band called E-band, which is attracting attention for use as an operation band for next-generation mobile communication.

In Embodiment 2, the operation band of the Rx 4 is the 71-76 GHz band, and the operation band of the Tx 5 is the 81-86 GHz band. In a case where such Rx 4 and Tx 5 are used, the filter pair 20 of the diplexer 10 may be a BPF pair that allows passage of 71-76 GHz band high frequency signals and that reflects 81-86 GHz band high frequency signals.

The operation band of the Rx 4 and the operation band of the Tx 5 are each not limited to the foregoing E-band. For example, the operation bands of the Rx 4 and the Tx 5 may be the 60 GHz band or may be a combination of the 60 GHz band and the E-band.

There are two routes from the converter section 50A (input/output converter section) to which the antenna 2 is connected to the converter section 60B (output converter section) to which the Rx 4 is connected. The first route is through the port 303 of the directional coupler section 30, the port 301 of the directional coupler section 30, the filter 21, the port 401 of the directional coupler section 40, and then the port 404 of the directional coupler section 40. The second route is through the port 303 of the directional coupler section 30, the port 302 of the directional coupler section 30, the filter 22, the port 402 of the directional coupler section 40, and then port 404 of the directional coupler section 40.

The transmitting and receiving system 1 configured like above is capable of supplying a high frequency signal received at the antenna 2 to the Rx 4 via the converter sections 50A and 60B.

Similarly, there are also two routes from the converter section 50B (input converter section) to which the Tx 5 is connected to the converter section 50A to which the antenna 2 is connected. In the first route, a high frequency signal is reflected at the boundary between the port 302 of the directional coupler section 30 and the filter 22 and then reaches the port 303. In the second route, a high frequency signal is reflected at the boundary between the port 301 of the directional coupler section 30 and the filter 21 and then reaches the port 303.

The transmitting and receiving system 1 configured like above is capable of supplying a high frequency signal output from the Tx5 to the antenna 2 via the converter sections 50B and 50A.

The transmitting and receiving system 1 configured like above brings about the same effects as the diplexer 10.

The guide wavelength in a diplexer 10A in each Example Group (or in each Example) is 3388 µm in the case of 60 GHz, 2933 µm in the case of 73.5 GHz, and 2343 µm in the case of 83.5 GHz. In a case where the operation band of the Rx 4 is the 71-76 GHz band and the operation band of the Tx 5 is the 81-86 GHz band as described earlier and where a configuration described in any of Example Groups (or Examples) described later is employed, the guide wavelength λgr in the diplexer 10A is λgr = 2933 µm, and the guide wavelength λgt of the diplexer 10A is λgt = 2343 µm.

### [Variation 3]

The following description will discuss a transmitting and receiving system 1A, which is Variation 3 of the present invention, with reference to (b) of Fig. 7. (b) of Fig. 7 is a block diagram of the transmitting and receiving system 1A.

The transmitting and receiving system 1A is obtained by modifying the transmitting and receiving system 1 illustrated in (a) of Fig. 4 such that (1) the diplexer 10 in accordance with Embodiment 1 is replaced with the diplexer 10A which is Variation 1 and (2) the port to which the Rx4 is connected and the port to which the Tx5 is connected are swapped. Specifically, as illustrated in (b) of Fig. 7, the transmitting and receiving system 1A includes, as one of the converter sections included in the diplexer 10A, the terminal section 70, which is a terminated converter section. Furthermore, the Rx 4 is connected to the port 502B of the converter section 50B, and the Tx 5 is connected to the port 602B of the converter section 60B.

As has been described with reference to Fig. 4, the port 702 of the terminal section 70 is terminated because the conductor pad 755 and the electrode 79 are connected together by the resistor 760.

The filter pair 20 of the diplexer 10A of the transmitting and receiving system 1A may be configured such that the filter pair 20 allows passage of high frequency signals falling within the operation band of the Tx 5 and reflects high frequency signals falling within the operation band of the Rx 4.

The routes from the converter section 60B to which the Tx 5 is connected to the converter section 50A to which the antenna 2 is connected, and the routes from the converter section 50A to which the antenna 2 is connected to the converter section 50B to which the Rx4 is connected, are as defined in regard to the transmitting and receiving system 1 illustrated in (a) of Fig. 7, and therefore descriptions therefor are omitted here.

### [Example 1]

In Example 1 of the present invention, a simulation was conducted using the configuration of the diplexer 10A of the transmitting and receiving system 1A illustrated in (b) of Fig. 7. In Example 1, S-parameters were simulated using the port 303 as a first port, the port 403 as a second port, the port 404 as a third port, and the port 304 as a fourth port. As such, the simulation results in Example 1 do not include the characteristics of the converter sections 50A, 50B, 60B, and 70.

In the diplexer 10A in Example 1, the passband of each of the filters 21 and 22 is the 71-76 GHz band. Furthermore, in the diplexer 10A of Example 1, the converter section 50A is an input/output converter section, the converter section 50B is an output converter section, and the converter section 60B is an input converter section. That is, the diplexer 10A is designed to operate with the antenna 2 connected to the port 502A, the Rx 4 connected to the port 502B, and the Tx 5 connected to the port 602B. That is, in the diplexer 10A in Example 1, the antenna circuit is connected to one of the third and fourth converter sections which is not the output convertor (i.e., connected to the input/output converter section).

Furthermore, in Example 1, the operation band of the Rx 4 is the 81-86 GHz band, and the operation band of the Tx 5 is the 71-76 GHz band.

Note that, in the diplexer 10A in Example 1, the dielectric substrate 11 has a thickness of 520 µm and a specific inductive capacity of 3.823. Further note that, in the diplexer 10A in Example 1, the distance between the narrow wall 511 and the narrow wall 53 (a pair of narrow walls) is 1.54 mm, and the distance L between the blind via 57A and the short wall 54A is 484 µm.

The above parameters were selected so that the operation bands would be two bands falling within the E-band, i.e., the 71-76 GHz band (center frequency: 73.5 GHz) and the 81-86 GHz band (center frequency: 83.5 GHz). In Example 1, the diplexer 10A is designed to operate using the 71-76 GHz band as the operation band of the Tx 5 and using the 81-86 GHz band as the operation band of the Rx 4. Each of the foregoing design parameters of the diplexer 10A in Example 1 was selected so that the center frequency of the operation band would be about 78.5 GHz. That is, each of the foregoing design parameters of the diplexer 10A in Example 1 was selected so that the cutoff frequency would be 51.5 GHz.

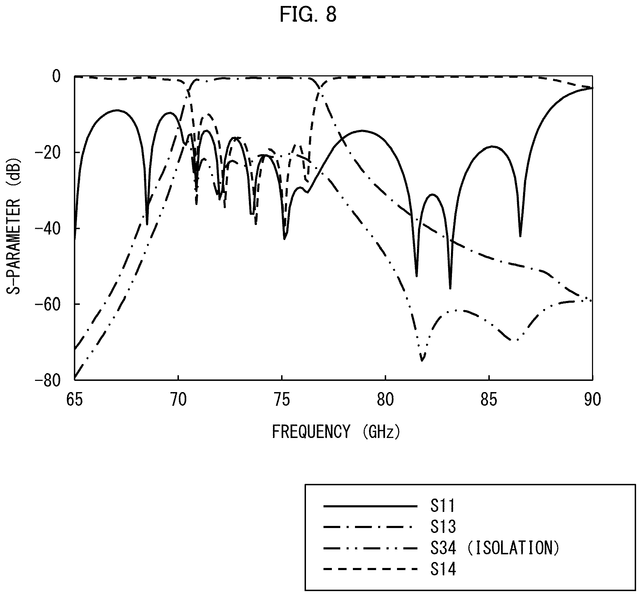

A simulation was conducted using the transmitting and receiving system 1A configured as described above. Fig. 8 shows the frequency dependence of each S-parameter (S11, S13, S34, S14). In regard to the S-parameters shown in Fig. 8, (1) S11 indicates reflection characteristics at the port 502A, (2) S13 indicates transmission characteristics between the port 502A and the port 602B, (3) S34 indicates transmission characteristic between the port 502B and the port 602B, and (4) S14 indicates transmission characteristics between the port 502A and the port 502B.

In the following descriptions, S34 may be also referred to as isolation characteristics. The Rx 4 receives high-frequency waves output from the antenna 2 (hereinafter referred to as incoming waves), and also receives high-frequency waves output from the Tx 5 (hereinafter referred to as outgoing waves). If the outgoing waves of high power reach the Rx 4, the Rx 4 is required to carry out a reception of the incoming waves that are buried in the outgoing waves. It follows that it is difficult to properly carry out the reception of the incoming waves. In order for the Rx 4 to carry out the reception operation more properly, the outgoing waves reaching the port 502B preferably have attenuated power, in the operation band of the Rx 4. In other words, it is preferable that S34 is low in the operation band of the Rx 4.

Fig. 8 indicates that S13 is substantially 0 dB in the 71-76 GHz band (operation band of Tx 5) and S14 is substantially 0 dB in the 81-86 GHz band (operation band of Rx 4). This indicates that the diplexer 10A is a low-loss diplexer in which the return losses at the port 303, the port 404, and the port 304 are well reduced.

Fig. 8 further indicates that S34 is equal to or lower than -60 dB in the 81-86 GHz band, which is lower than the values of S34 in the 71-76 GHz band. This is because the antenna 2, the Rx 4, and the Tx 5 are connected to the diplexer 10A in the manner illustrated in (b) of Fig. 7 and because the passband of each of the filters 21 and 22 is the 71-76 GHz band. Even if the Tx 5 output transmission waves falling within the 81-86 GHz band, many of the transmission waves falling within the 81-86 GHz band would be reflected by the filters 21 and 22.

As such, in a case where the passband of each of the filters 21 and 22 is the 71-76 GHz band, the transmitting and receiving system 1A in Example 1 is capable of improving isolation characteristics at the Rx 4 as compared to a transmitting and receiving system in which (1) the Tx 5 is connected to the port 502B and (2) the Rx 4 is connected to the port 602B like that illustrated in (a) of Fig. 7.

Note that, even in a case where the operation band of the Rx 4 is the 71-76 GHz band and the operation band of the Tx 5 is the 81-86 GHz band, the configuration of the diplexer 10A illustrated in (b) of Fig. 7 can be employed, provided that the passband of each of the filters 21 and 22 is the 81-86 GHz band. This makes it possible to improve isolation characteristics at the Rx 4.

Furthermore, the Radio Act in Japan prohibits emission of high frequency waves outside the fixed band from an apparatus. According to the diplexer 10A in Example 1, the outgoing waves, which are to be emitted from the antenna 2, necessarily pass through the filters 21 and 22, whose passband is the 71-76 GHz band. Therefore, according to the diplexer 10A in Example 1, it is possible to prevent the emission of high frequency waves outside the band specified by the Radio Act. Also from this point of view, the configuration of the transmitting and receiving system 1A illustrated in (b) of Fig. 7 is more preferred than the configuration of the transmitting and receiving system 1 illustrated in (a) of Fig. 7.

### [Group of Examples 2]

In Group of Examples 2 of the present invention, diplexers 10A including converter sections 50A in which the lengths h of the blind vias 57A (see (b) of Fig. 3) were 420 µm, 440 µm, 460 µm, 480 µm, and 500 µm were prepared. The reflection characteristics (frequency dependence of |S11|) of each of the converter sections 50A of Group of Examples 2 for the 71-76 GHz band were simulated. The results of the simulations are shown in (a) of Fig. 9.

Note that, in each of the diplexers 10A of Group of Examples 2, the dielectric substrate 11 has a thickness of 520 µm and a specific inductive capacity of 3.823. Further note that, in each of the diplexers 10A of Group of Examples 2, the distance between the narrow wall 511 and the narrow wall 53 (a pair of narrow walls) is 1.54 mm, and the distance L between the blind via 57A and the short wall 54A is 484 µm.

The above parameters were selected so that the operation bands would be two operation bands falling within the E-band, i.e., the 71-76 GHz band (center frequency: 73.5 GHz) and the 81-86 GHz band (center frequency: 83.5 GHz). The distance between the narrow wall 511 and the narrow wall 53 (a pair of narrow walls) was selected in consideration of the specific inductive capacity of the dielectric substrate 11 used here so that the cutoff frequency would be 51.5 GHz, that is, so that the center frequency of the operation band would be about 78.5 GHz.

In the following descriptions, converter sections in which the return loss at the center frequency (e.g., 73.5 GHz) of the operation band (e.g., 71-76 GHz band) thereof is not more than -10 dB will be judged as "converter sections with small return loss in that operation band".

(a) of Fig. 9 indicates that the converter section 50A of each of the diplexers 10A of Group of Examples 2 is capable of reducing the value of |S11| to -10 dB or lower at 73.5 GHz, which is the center frequency of the 71-76 GHz band. Thus, the converter sections 50A whose lengths h are 420 µm, 440 µm, 460 µm, 480 µm, and 500 µm are all converter sections with small return loss.

It was found that especially the converter sections 50A whose lengths h are 440 µm and 460 µm are capable of reducing the value of |S11| to -20 dB or lower at 73.5 GHz, which is the center frequency. A comparison was made between the converter sections 50A whose lengths h are 440 µm and 460 µm, and it was found that the converter section 50A whose length h is 460 µm is capable of reducing the return loss in the 71-76 GHz band to a greater extent. The value 460 µm is equivalent to 15.7% of the guide wavelength at 73.5 GHz (center frequency).

The inventor of the present invention has found that, in a case where the length h is not less than 13% and not more than 20% of the guide wavelength of a high frequency signal having the center frequency of an operation band, the converter section 50A is capable of reducing the return loss at the center wavelength of an intended operation band.

### [Group of Examples 3]

In Group of Examples 3 of the present invention, diplexers 10A including converter sections 50A in which the lengths h of the blind vias 57A (see (b) of Fig. 3) were 450 µm, 470 µm, 490 µm, and 510 µm were prepared. The reflection characteristics (frequency dependence of |S11|) of the converter sections 50A of Group of Examples 3 for the 60 GHz band were simulated. The results of the simulations are shown in (b) of Fig. 9.

Note that, in each of the diplexers 10A of Group of Examples 3, the dielectric substrate 11 has a thickness of 520 µm and a specific inductive capacity of 3.823. Further note that, in each of the diplexers 10A of Group of Examples 3, the distance between the narrow wall 511 and the narrow wall 53 (a pair of narrow walls) is 2 mm, and the distance L between the blind via 57A and the short wall 54A is 575 µm. These parameters were selected so that the center frequency of the operation band would be 60 GHz. That is, the parameters were selected so that the cutoff frequency would be 39 GHz. Thus, the diplexers 10A of Group of Examples 3 are capable of propagating high frequency signals of the 60 GHz band.

(b) of Fig. 9 indicates that the converter section 50A of each of the diplexers 10A of Group of Examples 3 is capable of reducing the value of |S11| to -10 dB or lower at 60.0 GHz, which is the center frequency of the 60 GHz band. Thus, the converter sections 50A whose lengths h are 450 µm, 470 µm, 490 µm, and 510 µm are all converter sections with small return loss.

It was found that especially the converter section 50A whose length h is 490 µm is capable of reducing the return loss at 60 GHz (center frequency) to the greatest extent. The value 490 µm is equivalent to 14.5% of the guide wavelength at 60 GHz (center frequency).

The inventor of the present application has found that, in a case where the length h is not less than 13% and not more than 20% of the guide wavelength of a high frequency signal having the center frequency of an operation band, the converter section 50A is capable of reducing the return loss in an intended operation band.

### [Examples 4 and 5]

In Examples 4 and 5 of the present invention, diplexers 10A including converter sections 50A in which the distances L (i.e., the distance between the blind via 57A and the short wall 54A, see (b) of Fig. 3) were 410 µm and 484 µm were prepared. The reflection characteristics of each of the converter sections 50A of Examples 4 and 5 in the operation band of not less than 71 GHz and not more than 86 GHz were simulated. The results of the simulations are shown in Fig. 10.

Note that, in each of the diplexers 10A of Examples 4 and 5, the dielectric substrate 11 has a thickness of 520 µm and a specific inductive capacity of 3.823. Further note that, in each of the diplexers 10A of Examples 4 and 5, the distance between the narrow wall 511 and the narrow wall 53 (a pair of narrow walls) is 1.54 mm, and the length h of the blind via 57A is 460 µm. These parameters were selected so that the center frequency would be about 78.5 GHz, as described in Group of Examples 2.

Fig. 10 indicates that each of the converter sections 50A whose distances L are 410 pm and 484 pm has a value of |S11| equal to or lower than -10 dB both at 73.5 GHz (center frequency of 71-76 GHz band) and at 83.5 GHz (center frequency of 81-86 GHz band).

Furthermore, as shown in Table 1, the converter section 50A whose distance L is 410 µm is capable of reducing the value of |S11| more remarkably at 83.5 GHz than at 73.5 GHz, whereas the converter section 50A whose distance L is 484 µm is capable of reducing the value of |S11| more remarkably at 73.5 GHz than at 83.5 GHz. As such, by appropriately selecting the value of the distance L, it is possible to obtain a converter section 50A which is capable of reducing the return loss at the center frequency of one operation band and controlling the return loss at the center frequency of the other operation band at about - 10 dB.

**[Table 1]**

| Center frequency | L = 410 µm | L = 484 µm | \|ΔS11\| |
|---|---|---|---|
| 73.5 GHz | -11.71 dB | -28.86 dB | 17.15 |
| 83.5 GHz | -27.49 dB | -17.66 | 9.84 |

It follows that the difference ΔS11| in |S11| between the converter section 50A whose distance L is 410 µm and the converter section 50A whose distance L is 484 µm is about 17 dB at 73.5 GHz and is about 10 dB at 83.5 GHz. As such, by appropriately controlling the distance L, it is possible to obtain a converter section 50A that has an increased difference |ΔS11|.

As such, for example, in the transmitting and receiving system 1A illustrated in (b) of Fig. 7, it is possible to improve isolation characteristics between the input converter section and the output converter section by (1) applying the configuration of the above converter section 50A whose distance L is 410 µm to the converter section 50B (input converter section) and (2) applying the configuration of the above converter section 50A whose distance L is 484 µm to the converter section 60B (output converter section).

The inventor of the present invention has found that the return loss in one operation band is reduced and the return loss in the other operation band is increased, in a case where the distance L is not less than 14% and not more than 20% of the guide wavelength of a high frequency signal having the center frequency of the operation band.

Assume that the above configurations are applied to the transmitting and receiving system 1. Since the operation band of the Tx 5 is the 81-86 GHz band, the center frequency of the operation band of the Tx 5 is 83.5 GHz. Since the operation band of the Rx 4 is the 71-76 GHz band, the center frequency of the operation band of the Rx 4 is 73.5 GHz. In a case where a distance L of 410 µm is applied to the input converter section as described earlier, the distance L of 410 µm is equivalent to 17.5% of the guide wavelength λgt (= 2343 µm). On the other hand, in a case where a distance L of 484 µm is applied to the output converter section, the distance L of 484 µm is equivalent to 16.5% of the guide wavelength λgr (= 2933 µm).

Note that, the reflection characteristics of a converter section 50A in which the distance L is 504 µm were also measured (not illustrated in the graphs), and it was found that the value of |S11| at 73.5 GHz was low enough and the value of |S11| at 83.5 GHz was lower than that of the converter section 50A in which the distance L is 484 µm. This means that the distance L to be applied to the output converter section is more preferably 504 µm than 484 µm. In a case where a distance L of 504 µm is applied to the output converter section, the distance L of 504 µm is equivalent to 17.2% of the guide wavelength λgr (= 2933 µm).

It is more preferable from above that the percentage of the distance L relative to the guide wavelength λgt applied to the input converter section and the percentage of the distance L relative to the guide wavelength λgr applied to the output converter section are substantially equal to each other. The expression "substantially equal" refers to cases where the difference between the percentage of the distance L relative to the guide wavelength λgt applied to the input converter section and the percentage of the distance L relative to the guide wavelength λgr applied to the output converter section is not more than 0.5%.

### (Recap)

A diplexer (10) in accordance with Embodiment 1 and a diplexer (10A) which is Variation 1 each include: a filter pair (20) constituted by a first filter (21) and a second filter (22) which are arranged along with each other and each of which includes a first port (201A, 201B) and a second port (202A, 202B); a first directional coupler section (30) including a first port (301) and a second port (302) arranged next to each other and a third port (303) and a fourth port (304) arranged next to each other, the first port (301) of the first directional coupler section (30) being connected to the first port (201A) of the first filter (21), the second port (302) of the first directional coupler section (30) being connected to the first port (201B) of the second filter (22); a second directional coupler section (40) including a first port (401) and a second port (402) arranged next to each other and a third port (403) and a fourth port (404) arranged next to each other, the first port (401) of the second directional coupler section (40) being connected to the second port (202A) of the first filter (21), the second port (402) of the second directional coupler section (40) being connected to the second port (202B) of the second filter (22); a first converter section pair (50) constituted by a first converter section (50A) and a second converter section (50B) which are arranged along with each other and each of which includes a first port (501A, 501B) and a second port (502A, 502B), the first port (501A) of the first converter section (50A) being connected to the third port (303) of the first directional coupler section (30), the first port (501B) of the second converter section (50B) being connected to the fourth port (304) of the first directional coupler section (30); and a second converter section pair (60) constituted by a third converter section (60A) and a fourth converter section (60B, 70, 80) which are arranged along with each other and each of which includes a first port (601A, 601B) and a second port (602A, 602B), the first port (601A) of the third converter section (60A) being connected to the third port (403) of the second directional coupler section (40), the first port (601B) of the fourth converter section (60B, 70, 80) being connected to the fourth port (404) of the second directional coupler section (40).

In the diplexer (10, 10A), the first and second filters of the filter pair (20), the first directional coupler section (30), the second directional coupler section (40), the first and second converter sections of the first converter section pair (50), and the third and fourth converter sections of the second converter section pair (60) are constituted by respective waveguides, the waveguides being post-wall waveguides that have a first wide wall (conductor plate 13), a second wide wall (conductor plate 12), and narrow walls (211, 221, 23, 311, 321, 33, 411, 421, 43, 511, 521, 53, 611, 621, 63, 711, 73, 811, 83), the first wide wall (conductor plate 13) and the second wide wall (conductor plate 12) being a pair of conductor plates (12, 13) provided on opposite sides of a dielectric substrate (11), each of the narrow walls (211, 221, 23, 311, 321, 33, 411, 421, 43, 511, 521, 53, 611, 621, 63, 711, 73, 811, 83) being a post wall constituted by conductor posts (211i, 221i, 23i, 311i, 321i, 33i, 411i, 421i, 43i, 511i, 521i, 53i, 611i, 621i, 63i, 711i, 73i, 811i, 83i) passing through the dielectric substrate (11).

In the diplexer (10, 10A) configured as described above, the filter pair (20), the first directional coupler section (30), the second directional coupler section (40), the first converter section pair (50), and the second converter section pair (60) are constituted by a single dielectric substrate (11) and a pair of conductor plates (12 and 13) provided on the opposite sides of the dielectric substrate (11). That is, the diplexer (10, 10A) is an integrated diplexer in which the filter pair (20), the first directional coupler section (30), the second directional coupler section (40), the first converter section pair (50), and the second converter section pair (60) are integrated with each other by a post-wall waveguide technique.

As such, the diplexer (10, 10A) is smaller and more lightweight than conventional diplexers.

In the diplexer (10, 10A) in accordance with Embodiment 1, each of the first to fourth converter sections (50A, 50B, 60A, 60B, 70, 80) has an opening (13aA, 13a) in the first wide wall (conductor plate 13). The first to fourth converter sections (50A, 50B, 60A, 60B, 70, 80) further include a dielectric layer (14) disposed on a surface of the first wide wall (conductor plate 13), each of the first to fourth converter sections (50A, 50B, 60A, 60B, 70, 80) having an opening (14aA, 14a) in the dielectric layer (14) such that the opening (14aA, 14a) in the dielectric layer (14) overlaps the opening (13aA, 13a) in the first wide wall (conductor plate 13). Each of the first to fourth convertor sections (50A, 50B, 60A, 60B, 70, 80) includes: a signal line (55A, 75, 85) disposed on a surface of the dielectric layer (14), the signal line (55A, 75, 85) having one of opposite end portions overlapping the opening (13aA, 13a) in the first wide wall (conductor plate 13) and the opening (14aA, 14a) in the dielectric layer (14); an electrode (58A, 59A, 79, 89) disposed on the surface of the dielectric layer (14), the electrode (58A, 59A, 79, 89) being in electrical communication with the first wide wall (conductor plate 13) via a via (581A, 591A, 781i, 881i) in the dielectric layer (14), and a blind via (57A, 77, 87) provided in the dielectric substrate (11), the blind via (57A, 77, 87) being in electrical communication with the one of the opposite end portions of the signal line (55A, 75, 85).

According to the above configuration, the signal line (55A, 75, 85) of each of the first to fourth converter sections (50A, 50B, 60A, 60B, 70, 80) is combined with the first wide wall (conductor plate 13) to form a microstrip line. The microstrip line and the waveguide of the converter section (50A, 50B, 60A, 60B, 70, 80) are electromagnetically coupled together via the blind via (57A, 77, 87). As such, the converter section (50A, 50B, 60A, 60B, 70, 80) is capable of converting the mode of a high frequency signal, which has propagated through the waveguide, into the mode of a high frequency signal that is to propagate through the microstrip line.

Furthermore, the dielectric layer (14) of the converter section (50A, 50B, 60A, 60B, 70, 80) has, on its surface, the signal line (55A, 75, 85) and the electrode (58A, 59A, 79, 89) that is in electrical communication with the first wide wall (conductor plate 13). Therefore, according to the diplexer (10, 10A), any of various circuits (e.g., transmitter circuit (5), receiver circuit (4), and antenna circuit (antenna 2)) can be easily mounted to the converter section (50A, 50B, 60A, 60B, 70, 80) as compared with conventional diplexers.

In the diplexer (10) in accordance with Embodiment 1 and the diplexer (10A) which is Variation 1, it is preferable that: the first converter section (50A) or the second converter section (50B) is an input converter section (e.g., converter section 50B) for connection with a transmitter circuit (5); the third converter section (60A) or the fourth converter section (60B) is an output converter section (e.g., converter section 60B) for connection with a receiver circuit (4); the blind via (e.g., blind via of converter section 50B) of the input converter section (e.g., converter section 50B) has a length that is not less than 13% and not more than 20% of a guide wavelength λgt of a high frequency signal that has a center frequency of the transmitter circuit (5); and the blind via (e.g., blind via of converter section 60B) of the output converter section (e.g., converter section 60B) has a length that is not less than 13% and not more than 20% of a guide wavelength λgr of a high frequency signal that has a center frequency of the receiver circuit (4).

According to the above configuration, it is possible to reduce return losses at the input converter section and the output converter section. This in turn makes it possible to improve isolation characteristics between the input converter section and the output converter section.

In the diplexer (10) in accordance with Embodiment 1 and the diplexer (10A) which is Variation 1, it is preferable that: a distance between the blind via (e.g., blind via of converter section 50B) of the input converter section (e.g., converter section 50B) and a short wall (e.g., 54B) of the input converter section (e.g., converter section 50B) is not less than 14% and not more than 20% of the guide wavelength λgt; and a distance between the blind via (e.g., blind via of converter section 60B) of the output converter section (e.g., converter section 60B) and a short wall (e.g., 64B) of the output converter section (e.g., converter section 60B) is not less than 14% and not more than 20% of the guide wavelength λgr.

According to the above configuration, in a case where the diplexer (10, 10A) is put in operation with a transmitter circuit (5) connected to the input converter section and a receiver circuit (4) connected to the output converter section, it is possible to reduce the return loss in one of the operation bands of the transmitter circuit (5) and the receiver circuit (4) and to increase the return loss in the other one of the operations bands of the transmitter circuit (5) and the receiver circuit (4). This in turn makes it possible to improve isolation characteristics between the input converter section and the output converter section.

In the diplexer (10A) which is Variation 1, it is preferable that: one of the first to fourth converter sections (50A, 50B, 60B, 70, 80), which is not the input converter section (e.g., converter section 50B) or the output converter section (e.g., converter section 60B), is an input/output converter section (e.g., converter section 50A) for connection with an antenna circuit (antenna 2); another one of the first to fourth converter sections (50A, 50B, 60B, 70, 80), which is not the input converter section (e.g., converter section 50B), the output converter section (e.g., converter section 60B), or the input/output converter section (e.g., converter section 50A), is a terminated converter section (70, 80); and the terminated converter section (70, 80) further includes a resistor (760, 860) for electrical communication between the other of the opposite end portions of the signal line (75, 85) of the terminated converter section (70, 80) and the electrode (79, 89) of the terminated converter section (70, 80).

According to the above configuration, the resistor (760, 860) makes it possible to easily achieve electrical communication between the other of the opposite end portions of the signal line (75, 85) of one (70, 80) of the first to fourth converter sections (50A, 50B, 60B, 70, 80) and the electrode (79, 89) of that converter section (70, 80). That is, it is possible to easily terminate that converter section (70, 80). The terminated converter section (70, 80) reduces reflection to a greater extent than non-terminated converter sections (e.g., converter section (50A) in which the other end of the signal line (55A) is open). As such, the terminated converter section (70, 80) is capable of restricting a high frequency signal, coupled from one of the directional coupler sections, from being reflected at the converter section (70, 80) and becoming a reflected signal returning to the inside of the diplexer (10A).

In the diplexer (10) in accordance with Embodiment 1 and the diplexer (10A) which is Variation 1, it is preferable that a distance between the blind via (e.g., 57A) of the input/output converter section (e.g., converter section 50A) and a short wall (e.g., 54A) of the input/output converter section (e.g., converter section 50A) is not less than 14% and not more than 20% of a guide wavelength λga of a high frequency signal that has a center frequency of an operation band of the antenna circuit (antenna 2).

According to the above configuration, it is possible to reduce the return loss at the input/output converter section in the operation band of the antenna circuit (antenna 2).

In the diplexer (10A) which is Variation 1, it is preferable that the terminated converter section (70, 80) further includes an open stub (753, 853) provided somewhere between the opposite end portions of the signal line (75, 85).

According to the above configuration, it is possible to further restrict a high frequency signal, coupled from one of the directional coupler sections, from becoming a reflected signal returning to the inside of the diplexer (10A).

In the diplexer (10A) which is Variation 1, it is preferable that the terminated converter section (80) further includes a short stub (meander portion 854 and conductor pad 856) provided somewhere between the opposite end portions of the signal line (85).

According to the above configuration, it is possible to further restrict a high frequency signal, coupled from one of the directional coupler sections, from becoming a reflected signal returning to the inside of the diplexer (10A).

In the diplexer (10) in accordance with Embodiment 1 and the diplexer (10A) which is Variation 1, it is preferable that the waveguides constituting the first filter (21) and the second filter (22), respectively, are each divided by partition walls (212 to 217, 222 to 227) into resonators, each of the partition walls (212 to 217, 222 to 227) being constituted by conductor posts (212i to 217i, 222i to 227i) passing through the dielectric substrate (11), each of the partition walls (212 to 217, 222 to 227) having a gap (212a to 217a, 222a to 227a) that is defined by most-widely-spaced adjacent ones of the conductor posts (212i to 217i, 222i to 227i).

According to the above configuration, it is possible to form a filter having desired transmission characteristics by using a post-wall waveguide technique.

A transmitting and receiving system (1, 1A) in accordance with Embodiment 2 is a transmitting and receiving system (1) including a diplexer (10, 10A), a transmitter circuit (5), a receiver circuit (4), and an antenna circuit (antenna 2).

The diplexer (10, 10A) includes: a filter pair (20) constituted by a first filter (21) and a second filter (22) which are arranged along with each other and each of which includes a first port (201A, 201B) and a second port (202A, 202B); a first directional coupler section (30) including a first port (301) and a second port (302) arranged next to each other and a third port (303) and a fourth port (304) arranged next to each other, the first port (301) of the first directional coupler section (30) being connected to the first port (201A) of the first filter (21), the second port (302) of the first directional coupler section (30) being connected to the first port (201B) of the second filter (22); a second directional coupler section (40) including a first port (401) and a second port (402) arranged next to each other and a third port (403) and a fourth port (404) arranged next to each other, the first port (401) of the second directional coupler section (40) being connected to the second port (202A) of the first filter (21), the second port (402) of the second directional coupler section (40) being connected to the second port (202B) of the second filter (22); a first converter section pair (50) constituted by a first converter section (50A) and a second converter section (50B) which are arranged along with each other and each of which includes a first port (501A, 501B) and a second port (502A, 502B), the first port (501A) of the first converter section (50A) being connected to the third port (3030) of the first directional coupler section (30), the first port (501B) of the second converter section (50B) being connected to the fourth port (304) of the first directional coupler section (30); and a second converter section pair (60) constituted by a third converter section (60A) and a fourth converter section (60B, 70, 80) which are arranged along with each other and each of which includes a first port (601A, 601B) and a second port (602A, 602B), the first port (601A) of the third converter section (60A) being connected to the third port (403)of the second directional coupler section (40), the first port (601B) of the fourth converter section (60B, 70, 80) being connected to the fourth port (404) of the second directional coupler section (40).

In the diplexer (10, 10A), the first and second filters of the filter pair (20), the first directional coupler section (30), the second directional coupler section (40), the first and second converter sections of the first converter section pair (50), and the third and fourth converter sections of the second converter section pair (60) are constituted by respective waveguides, the waveguides being post-wall waveguides that have a first wide wall (conductor plate 13), a second wide wall (conductor plate 12), and narrow walls (211, 221, 23, 311, 321, 33, 411, 421, 43, 511, 521, 53, 611, 621, 63, 711, 73, 811, 83), the first wide wall (conductor plate 13) and the second wide wall (conductor plate 12) being a pair of conductor plates (12, 13) provided on opposite sides of a dielectric substrate (11), each of the narrow walls (211, 221, 23, 311, 321, 33, 411, 421, 43, 511, 521, 53, 611, 621, 63, 711, 73, 811, 83) being a post wall constituted by conductor posts (211i, 221i, 23i, 311i, 321i, 33i, 411i, 421i, 43i, 511i, 521i, 53i, 611i, 621i, 63i, 711i, 73i, 811i, 83i) passing through the dielectric substrate (11).

In the transmitting and receiving system (e.g., transmitting and receiving system 1), the transmitter circuit (5) is connected to an input converter section which is the first converter section (e.g., converter section 50A) or the second converter section (e.g., converter section 50B), the receiver circuit (4) is connected to an output converter section which is the third converter section (e.g., converter section 60A) or the fourth converter section (e.g., converter section 60B, 70, 80), and the antenna circuit (antenna 2) is connected to an input/output converter section, the input/output converter section being one (e.g., converter section 50A) of the first to fourth converter sections (50A, 50B, 60A, 60B) which is not the input converter section or the output converter section.

The transmitting and receiving system (1, 1A) configured as described above brings about the same effects as those of the diplexer (10, 10A) in accordance with one aspect of the present invention.

In the transmitting and receiving system (1A) in accordance with Embodiment 2, it is preferable that the antenna circuit (antenna 2) is connected to the input/output converter section, the input/output converter section being one (50A) of the third and fourth converter sections (converter sections 50A and 50B of transmitting and receiving system 1A) which is not the output converter section (50B).

According to the above configuration, it is possible to improve isolation characteristics between the input converter section (60B) and the output converter section (50B), as compared to a case in which the antenna circuit (antenna 2) is connected to one (50A) of the first and second converter sections (converter sections 50A and 50B of transmitting and receiving system 1) which is not the input converter section (50B) like the transmitting and receiving system 1.

In the transmitting and receiving system (1A) in accordance with Embodiment 2, it is preferable that one (70, 80) of the first to fourth converter sections (50A, 50B, 60B, 70, 80), which is not the input converter section (60B), the output converter section (50B), or the input/output converter section (50A), has an opening (13a) in a wide wall (conductor plate 13).

It is preferable that the converter section (70, 80) further includes: a dielectric layer (14) disposed on a surface of the first wide wall (conductor plate 13), the converter section (70, 80) having an opening (14a) in the dielectric layer (14) such that the opening (14a) in the dielectric layer (14) overlaps the opening (13a) in the first wide wall (conductor plate 13); a signal line (75, 85) disposed on a surface of the dielectric layer (14), the signal line (75, 85) having one of opposite end portions overlapping the opening (13a) in the first wide wall (conductor plate 13) and the opening (14a) in the dielectric layer (14); an electrode (79, 89) disposed on the surface of the dielectric layer (14), the electrode (79, 89) being in electrical communication with the first wide wall (conductor plate 13) via a via (781, 881) in the dielectric layer (14); a blind via (77, 87) connected to the one of the opposite end portions of the signal line (75, 85), the blind via (77, 87) being formed in the dielectric substrate (11) via the opening (13a) in the first wide wall (conductor plate 13) and the opening (14a) in the dielectric layer (14); and a resistor (760) for electrical communication between the signal line (75, 85) and the electrode (79, 89).

The transmitting and receiving system (1) configured as described above brings about the same effects as those of the diplexer (10) in accordance with Embodiment 1.

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

1, 1A Transmitting and receiving system
2 Antenna
3 Resistor
4 Receiver circuit (Rx)
5 Transmitter circuit (Tx)
10, 10A Diplexer
11 Dielectric substrate
12 and 13 Waveguide plates (a pair of wide walls)
13aA, 13a Opening
14 Dielectric layer
14aA, 14a Opening
20 Filter pair
21 and 22 Filters (first and second filters)
201A and 202A, 201B and 202B Ports (first and second ports)
211i, 221i, 23i, 311i, 321i, 33i, 411i, 421i, 43i, 511i, 521i, 53i, 611i, 621i, 63i, 54Ai, 54Bi, 64Ai, 64Bi, 212i to 217i, 222i to 227i, 74i, 84i Conductor posts
211, 221, 23, 311, 321, 33, 411, 421, 43, 511, 521, 53, 611, 621, 63, Narrow wall (post wall)
54A, 54B, 64A, 64B, 74, 84 Short wall (post wall)
212 to 217, 222 to 227 Partition walls (post walls)
212a to 217a, 222a to 227a Gaps
30 and 40 Directional coupler sections (first and second directional coupler sections)
301 to 304, 401 to 404 Ports (first to fourth ports)
50 and 60 Convertor section pairs (a pair of first and second converter sections)
50A and 50B Convertor sections (first and second converter sections)
501A and 502A, 501B and 502B Ports (first and second ports)
55A, 75, 85 Signal line
60A and 60B Convertor sections (third and fourth converter sections)
601A and 602A, 601B and 602B Ports (first and second ports)
70 Terminal section (terminated converter section)
701 and 702 Ports (first and second ports)
760, 860 Resistor
80 Terminal section (terminated converter section)
801 and 802 Ports (first and second ports)

## Claims

1. A diplexer comprising:
a filter pair constituted by a first filter and a second filter which are arranged along with each other and each of which includes a first port and a second port;
a first directional coupler section including a first port and a second port arranged next to each other and a third port and a fourth port arranged next to each other, the first port of the first directional coupler section being connected to the first port of the first filter, the second port of the first directional coupler section being connected to the first port of the second filter;
a second directional coupler section including a first port and a second port arranged next to each other and a third port and a fourth port arranged next to each other, the first port of the second directional coupler section being connected to the second port of the first filter, the second port of the second directional coupler section being connected to the second port of the second filter;
a first converter section pair constituted by a first converter section and a second converter section which are arranged along with each other and each of which includes a first port and a second port, the first port of the first converter section being connected to the third port of the first directional coupler section, the first port of the second converter section being connected to the fourth port of the first directional coupler section; and
a second converter section pair constituted by a third converter section and a fourth converter section which are arranged along with each other and each of which includes a first port and a second port, the first port of the third converter section being connected to the third port of the second directional coupler section, the first port of the fourth converter section being connected to the fourth port of the second directional coupler section,
the first and second filters of the filter pair, the first directional coupler section, the second directional coupler section, the first and second converter sections of the first converter section pair, and the third and fourth converter sections of the second converter section pair being constituted by respective waveguides, the waveguides being post-wall waveguides that have a first wide wall, a second wide wall, and narrow walls, the first wide wall and the second wide wall being a pair of conductor plates provided on opposite sides of a dielectric substrate, each of the narrow walls being a post wall constituted by conductor posts passing through the dielectric substrate.

2. The diplexer according to claim 1, wherein:
each of the first to fourth converter sections has an opening in the first wide wall;
the first to fourth converter sections further include a dielectric layer disposed on a surface of the first wide wall, each of the first to fourth converter sections having an opening in the dielectric layer such that the opening in the dielectric layer overlaps the opening in the first wide wall; and
each of the first to fourth converter sections further includes
a signal line disposed on a surface of the dielectric layer, the signal line having one of opposite end portions overlapping the opening in the first wide wall and the opening in the dielectric layer,
an electrode disposed on the surface of the dielectric layer, the electrode being in electrical communication with the first wide wall via a via in the dielectric layer, and
a blind via provided in the dielectric substrate, the blind via being in electrical communication with the one of the opposite end portions of the signal line.

3. The diplexer according to claim 2, wherein:
the first converter section or the second converter section is an input converter section for connection with a transmitter circuit;
the third converter section or the fourth converter section is an output converter section for connection with a receiver circuit;
the blind via of the input converter section has a length that is not less than 13% and not more than 20% of a guide wavelength λgt of a high frequency signal that has a center frequency of an operation band of the transmitter circuit; and
the blind via of the output converter section has a length that is not less than 13% and not more than 20% of a guide wavelength λgr of a high frequency signal that has a center frequency of an operation band of the receiver circuit.

4. The diplexer according to claim 3, wherein:
a distance between the blind via of the input converter section and a short wall of the input converter section is not less than 14% and not more than 20% of the guide wavelength λgt; and
a distance between the blind via of the output converter section and a short wall of the output converter section is not less than 14% and not more than 20% of the guide wavelength λgr.

5. The diplexer according to claim 3 or 4, wherein:
one of the first to fourth converter sections, which is not the input converter section or the output converter section, is an input/output converter section for connection with an antenna circuit;
another one of the first to fourth converter sections, which is not the input converter section, the output converter section, or the input/output converter section, is a terminated converter section; and
the terminated converter section further includes a resistor for electrical communication between the other of the opposite end portions of the signal line of the terminated converter section and the electrode of the terminated converter section.

6. The diplexer according to claim 5, wherein a distance between the blind via of the input/output converter section and a short wall of the input/output converter section is not less than 14% and not more than 20% of a guide wavelength λga of a high frequency signal that has a center frequency of an operation band of the antenna circuit.

7. The diplexer according to claim 5 or 6, wherein the terminated converter section further includes an open stub provided somewhere between the opposite end portions of the signal line.

8. The diplexer according to any one of claims 5 to 7, wherein the terminated converter section further includes a short stub provided somewhere between the opposite ends of the signal line.

9. The diplexer according to any one of claims 1 to 8, wherein the waveguides constituting the first filter and the second filter, respectively, are each divided by partition walls into resonators, each of the partition walls being constituted by conductor posts passing through the dielectric substrate, each of the partition walls having a gap that is defined by most-widely-spaced adjacent ones of the conductor posts.

10. A transmitting and receiving system comprising a diplexer, a transmitter circuit, a receiver circuit, and an antenna circuit,
the diplexer including:
a filter pair constituted by a first filter and a second filter which are arranged along with each other and each of which includes a first port and a second port;
a first directional coupler section including a first port and a second port arranged next to each other and a third port and a fourth port arranged next to each other, the first port of the first directional coupler section being connected to the first port of the first filter, the second port of the first directional coupler section being connected to the first port of the second filter;
a second directional coupler section including a first port and a second port arranged next to each other and a third port and a fourth port arranged next to each other, the first port of the second directional coupler section being connected to the second port of the first filter, the second port of the second directional coupler section being connected to the second port of the second filter;
a first converter section pair constituted by a first converter section and a second converter section which are arranged along with each other and each of which includes a first port and a second port, the first port of the first converter section being connected to the third port of the first directional coupler section, the first port of the second converter section being connected to the fourth port of the first directional coupler section; and
a second converter section pair constituted by a third converter section and a fourth converter section which are arranged along with each other and each of which includes a first port and a second port, the first port of the third converter section being connected to the third port of the second directional coupler section, the first port of the fourth converter section being connected to the fourth port of the second directional coupler section,
the first and second filters of the filter pair, the first directional coupler section, the second directional coupler section, the first and second converter sections of the first converter section pair, and the third and fourth converter sections of the second converter section pair being constituted by respective waveguides, the waveguides being post-wall waveguides that have a first wide wall, a second wide wall, and narrow walls, the first wide wall and the second wide wall being a pair of conductor plates provided on opposite sides of a dielectric substrate, each of the narrow walls being a post wall constituted by conductor posts passing through the dielectric substrate,
the transmitter circuit being connected to an input converter section which is the first converter section or the second converter section,
the receiver circuit being connected to an output converter section which is the third converter section or the fourth converter section,
the antenna circuit being connected to an input/output converter section, the input/output converter section being one of the first to fourth converter sections which is not the input converter section or the output converter section.

11. The transmitting and receiving system according to claim 10, wherein the antenna circuit is connected to the input/output converter section, the input/output converter section being one of the third and fourth converter sections which is not the output converter section.

12. The transmitting and receiving system according to claim 10 or 11, wherein:
one of the first to fourth converter sections, which is not the input converter section, the output converter section, or the input/output converter section, has an opening in a wide wall;
the one of the first to fourth converter sections further includes
a dielectric layer disposed on a surface of the first wide wall, the one of the first to fourth converter sections having an opening in the dielectric layer such that the opening in the dielectric layer overlaps the opening in the first wide wall,
a signal line disposed on a surface of the dielectric layer, the signal line having one of opposite end portions overlapping the opening in the first wide wall and the opening in the dielectric layer,
an electrode disposed on the surface of the dielectric layer, the electrode being in electrical communication with the first wide wall via a via in the dielectric layer,
a blind via connected to the one of the opposite end portions of the signal line, the blind via being formed in the dielectric substrate via the opening in the first wide wall and the opening in the dielectric layer, and
a resistor for electrical communication between the signal line and the electrode.
